(19) Europäisches Patentamt
European Patent Office
Office européen des brevets

(11) **EP 3 380 808 B1**

(12) **FASCICULE DE BREVET EUROPEEN**

(45) Date de publication et mention de la délivrance du brevet:
**05.05.2021 Bulletin 2021/18**

(51) Int Cl.:
**G01C 19/60** *(2006.01)* **G21K 1/00** *(2006.01)*
**H05H 3/00** *(2006.01)* **G01C 19/64** *(2006.01)*

(21) Numéro de dépôt: **16801231.8**

(22) Date de dépôt: **24.11.2016**

(86) Numéro de dépôt international:
**PCT/EP2016/078722**

(87) Numéro de publication internationale:
**WO 2017/089489 (01.06.2017 Gazette 2017/22)**

(54) **CAPTEUR A ATOMES FROIDS PIEGES SUR PUCE PERMETTANT UNE MESURE DE VITESSE DE ROTATION**

IN EINEM CHIP EINGESCHLOSSENER ULTRAKALTER ATOMSENSOR ZUR MESSUNG DER ROTATIONSGESCHWINDIGKEIT

ON-CHIP TRAPPED ULTRACOLD ATOM SENSOR ALLOWING ROTATIONAL VELOCITY TO BE MEASURED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2015 FR 1502482**

(43) Date de publication de la demande:
**03.10.2018 Bulletin 2018/40**

(73) Titulaire: **THALES**
**92400 Courbevoie (FR)**

(72) Inventeurs:
- **DUPONT-NIVET, Matthieu**
**91767 Palaiseau Cedex (FR)**
- **SCHWARTZ, Sylvain**
**91767 Palaiseau Cedex (FR)**

(74) Mandataire: **Marks & Clerk France**
**Immeuble "Visium"**
**22, avenue Aristide Briand**
**94117 Arcueil Cedex (FR)**

(56) Documents cités:
**CN-A- 102 927 978     US-B1- 7 030 370**

- **Stephen Richard Segal ET AL: "Progress towards an ultracold atomic Sagnac gyroscope", , 1 janvier 2010 (2010-01-01), XP055279050, ISBN: 978-1-109-78234-9 Extrait de l'Internet: URL:https://jila.colorado.edu/sites/defaul t/files/assets/files/publications/segal_th esis.pdf [extrait le 2016-09-07]**
- **Patricialee ET AL: "COLDATOMOPTICSONACHIP", , 15 janvier 2015 (2015-01-15), XP055300454, Extrait de l'Internet: URL:https://www.researchgate.net/profile/J ason_Alexander3/publication/266046362_COLD _ATOM_OPTICS_ON_A_CHIP/links/54b7e6390cf 2c 27adc476b8c.pdf?origin=publication_detail [extrait le 2016-09-07]**
- **CARLOS L. GARRIDO ALZAR ET AL: "Towards High Sensitivity Rotation Sensing Using an Atom Chip", RESEARCH IN OPTICAL SCIENCES, 1 janvier 2012 (2012-01-01), page JT2A.10, XP55343237, Washington, D.C. DOI: 10.1364/HILAS.2012.JT2A.10 ISBN: 978-1-55752-939-8**
- **BRINK D M ET AL: "Majorana spin-flip transitions in a magnetic trap", ARXIV.ORG, CORNELL UNIVERSITY LIBRARY, 201 OLIN LIBRARY CORNELL UNIVERSITY ITHACA, NY 14853, 17 October 2006 (2006-10-17), XP080259259, DOI: 10.1103/PHYSREVA.74.035401**

**Description**

L'invention concerne les systèmes de mesure de la vitesse de rotation et plus particulièrement les gyromètres à atomes froids sur puce.

La gyrométrie est initialement fondée sur des mesures effectuées par la mise en œuvre de systèmes basés sur des pendules et des ressorts. Elle a aujourd'hui recours à des systèmes optiques ou à ondes de matières. Dans ce contexte, Alzar *et al.* (Garrido Alzar, C. L., Yan, W., & Landragin, A., 2012, March, Towards High Sensitivity Rotation Sensing Using an Atom Chip, High Intensity Lasers and High Field Phenomena, pp. JT2A-10, Optical Society of America) ont proposé un gyroscope compact sur puce, utilisant des ondes de matière se propageant dans un guide magnétique circulaire, appelé guide d'onde par analogie avec un guide d'onde électromagnétique. Les mesures de rotation sur ce type de dispositif sont effectuées en exploitant l'effet Sagnac. Le déphasage $\theta$ induit par effet Sagnac entre deux ondes de matière contrarotatives dans un référentiel tournant à la vitesse angulaire $\Omega$, est donné par :

$$\theta = \frac{2Am}{\hbar} \, \Omega \qquad\qquad (1)$$

où A est l'aire inscrite dans le guide d'onde, m la masse des atomes et $\bar{h}$ la constante de Planck réduite. L'exploitation de l'effet Sagnac atomique décrit ci-dessus constitue une rupture technologique dans le domaine des gyromètres qui utilisent classiquement l'effet Sagnac optique : le rapport entre le déphasage Sagnac atomique et optique est donné, toutes choses égales par ailleurs, par la quantité $mc^2/h\nu$ et est de l'ordre de $10^{10}$ ou $10^{11}$ selon le type d'atome et la fréquence optique $\nu$ considérée. Dans le dispositif divulgué par Alzar *et al.,* des atomes froids sont confinés dans un guide d'onde magnétique circulaire. Ce dispositif permet un temps d'interrogation des atomes long (supérieur à une seconde) et une dispersion de la vitesse de propagation suffisamment faible pour exploiter les franges d'interférences de nuages atomiques lors d'une mesure. Le dépôt de fils conducteurs imprimés ou déposés sur le substrat de la puce est une méthode typique de réalisation d'un guide d'onde magnétique. De tels dépôts comportent des rugosités de surfaces, qui sont reportées sur la morphologie du guide d'onde. Cet élément constitue un problème technique majeur. En effet, lors du guidage d'atomes refroidis dans le guide d'onde, les atomes peuvent rencontrer ces variations liées aux rugosités de la surface de la puce. D'un point de vue ondulatoire, une partie de l'atome peut être réfléchie et l'autre transmise, ce qui a pour effet d'augmenter considérablement la dispersion des atomes refroidis dans le guide d'onde, et ainsi de rendre potentiellement impossible la mesure de l'effet Sagnac.

Typiquement, une caméra de type CCD est utilisée pour mesurer spatialement la densité d'atomes dans la région de formation des interférences. Cette méthode requiert un dispositif optique adapté à la microscopie ; ce type de montage est difficilement compatible avec des applications embarquées et/ou compactes.

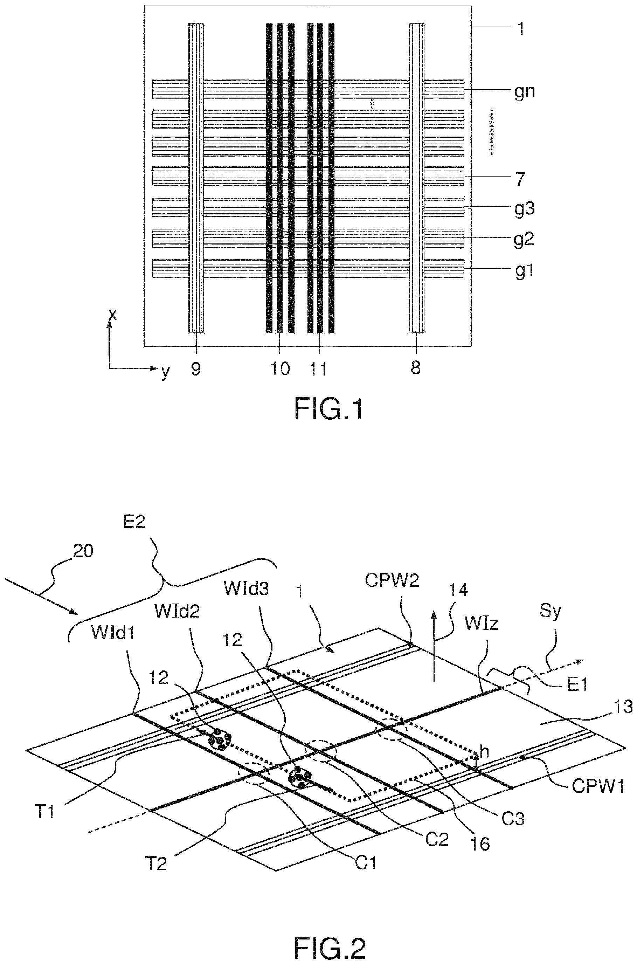

Le document CN102927978 décrit un capteur à atome froid sur puce atomique comprenant deux guides d'ondes hyperfréquence 10 et 11 parallèles entre eux selon une direction x, deux fils conducteurs 8 et 9 également selon la direction x disposés de chaque côté des guides d'onde et une pluralité de n fils conducteurs g1, g2, ..., gn selon une direction perpendiculaire y, tel qu'illustré figure 1.

Des atomes froids présentant deux état internes |a> et |b> sont générés.

La combinaison des potentiels créés par les guides d'onde et les fils conducteurs, combinée au champ magnétique homogène est supposée créer deux minima de potentiel constituant deux pièges tridimensionnels à atomes froids, un piège pour chaque état interne. Les différents courants appliqués permettent de déplacer les pièges selon une trajectoire qui est suivie dans un sens par un des pièges correspondant aux atomes dans un état interne, et dans l'autre sens par le deuxième piège correspondant aux atomes dans l'autre état interne.

Pour un fonctionnement correct du dispositif, il faut d'une part que les deux états |a> et |b> de l'interféromètre se superposent de manière cohérente.

D'autre part il faut que les deux minima de potentiels aient exactement le même niveau pour ne pas inclure dans le terme de phase mesuré par l'interféromètre une dépendance avec la différence de niveau entre les deux minima de potentiels. Il faut aussi que les deux minima de potentiels aient la même courbure pour maintenir un temps de cohérence de l'interféromètre supérieur à la durée de la mesure interférométrique, en effet dans le cadre de l'utilisation d'atomes ultrafroids thermiques le temps de cohérence est inversement proportionnel à la différence de courbure entre les deux minima de potentiels.

La topologie de fils décrite dans la figure 1 du document CN102927978 ne permet pas d'obtenir aisément deux puits de potentiels identiques (égalité des courbures et des minima des potentiels). En effet la présence des deux fils 8 et 9 impose de parfaitement égaliser avec une très haute précision les courants continus les parcourant pour obtenir les deux puits identiques.

La topologie de fils (ensemble de 8, 9 et gi) décrite dans la figure 1 du document CN102927978 ne permet pas de créer un piège suffisamment confinant suivant l'axe y de la figure 1 pour permettre un refroidissement efficace des atomes et un déplacement des pièges suivant l'axe y dans un temps plus court que le temps de cohérence de la source atomique utilisée.

La topologie de fils (ensemble de fils 8, 9 et gi) décrite dans la figure 1 du document CN102927978 crée un piège magnétique présentant un minimum ayant un champ magnétique nul. Cela à deux conséquences sur le fonctionnement du capteur :

- Des pertes atomiques par effet Majorana pendant la phase de refroidissement des atomes, très peu d'atomes sont donc disponibles à la fin du refroidissement il en résulte un rapport signal sur bruit très faible.
- Comme les deux états de l'interféromètre sont deux sous-nivaux Zeeman et qu'à un zéro de champ magnétique tous les niveaux Zeeman sont dégénérés, il est impossible de réaliser une superposition cohérente propre entre les deux états de l'interféromètre et donc d'initialiser le capteur.

Ainsi la configuration de fils conducteurs/guide d'onde hyperfréquence du document CN102927978 présente de nombreux inconvénients. L'invention vise à surmonter, complètement ou partiellement les problèmes techniques et inconvénients liés à la topologie de fils du document précité.

Un objet de l'invention permettant d'atteindre ce but est un capteur à atomes ultrafroids permettant une mesure de vitesse de rotation selon un axe de mesure, ledit capteur comprenant au moins :

- une puce électronique placée dans une enceinte à vide et comportant un plan de mesure normal audit axe de mesure;
- une source d'atomes agencée pour générer un nuage d'atomes ultrafroids près dudit plan de mesure:
- un émetteur d'ondes électromagnétiques adapté à initialiser les états internes desdits atomes ultrafroids en une superposition d'états internes |a> et |b> ;
- des moyens adaptés à générer un premier et un deuxième pièges à atomes ultrafroids, un piège permettant d'immobiliser un nuage d'atomes ultrafroids dans un état interne différent de l'autre piège, à une distance prédéterminée dudit plan de mesure, lesdits moyens comprenant :

    ❖ au moins un premier et un deuxième guides d'onde adaptés à la propagation d'ondes hyperfréquences micro-ondes à des pulsations $\omega_a$ et $\omega_b$, lesdits guides d'onde étant non sécants et disposés symétriquement par rapport à un axe dénommé axe de symétrie,
    ❖ des fils conducteurs intégrés à ladite puce et adaptés à être traversés par des courants continus, répartis selon un premier ensemble comprenant au moins un fil conducteur et un deuxième ensemble comprenant une pluralité de n fils conducteurs parallèles entre eux, lesdits ensembles étant agencés de sorte que l'au moins un fil conducteur du premier ensemble ne soit pas parallèle aux fils conducteurs du deuxième ensemble, définissant n points de croisement entre l'au moins un fil conducteur du premier ensemble et un fil conducteur du deuxième ensemble, tous les points de croisement étant localisés sur l'axe de symétrie,
    ❖ un générateur de champ magnétique homogène,

- un système de détection d'intensité optique adapté à mesurer au moins une population de dits atomes ultrafroids dans un dit état interne ;
- au moins un processeur, au moins un générateur de tension ou de courant continu adapté à piloter des courants électriques dans lesdits fils conducteurs et au moins un générateur de tension ou de courant micro-ondes connecté aux dits guides d'onde,
- lesdits moyens étant configurés pour modifier l'énergie desdits atomes ultrafroids de manière à créer un minima de potentiel pour les atomes ultrafroids dans l'état interne |a> et un minima de potentiel pour les atomes ultrafroids dans l'état interne |b>, formant ainsi lesdits premier et deuxième pièges à atomes ultrafroids, et pour déplacer lesdits pièges suivant une trajectoire fermée, parcourue dans un sens par les atomes ultrafroids du premier piège et dans le sens opposé par les atomes ultrafroids du deuxième piège.

Avantageusement lesdits moyens sont adaptés à générer des pièges à atomes ultrafroids n'étant pas condensés. Avantageusement la température des atomes ultrafroids est supérieure à 20 nanokelvins, préférentiellement supérieure à 100 nanokelvins, et inférieure à 400 nanokelvins, préférentiellement à 300 nanokelvins.

Avantageusement la direction dudit champ magnétique homogène est parallèle audit plan de mesure Préférentiellement les deux guides d'onde sont parallèles entre eux.

Selon une variante le premier ensemble est constitué d'un fil conducteur unique (Wlz) coïncidant avec l'axe de symétrie (Sy). Préférentiellement les fils conducteurs du deuxième ensemble ne sont pas perpendiculaires au fil conducteur unique du premier ensemble.

Selon une autre variante le premier ensemble comprend une pluralité de n fils conducteurs parallèles entre eux. Avantageusement un angle entre les fils conducteurs du premier ensemble et les fils conducteurs du deuxième ensemble est compris entre 30° et 60°. Selon un mode de réalisation de cette variante le premier ensemble comprend en outre un fil conducteur coïncidant avec l'axe de symétrie.

Préférentiellement les deux guides d'onde et les fils conducteurs sécants avec lesdits guides d'onde sont disposés respectivement selon un premier niveau et un deuxième niveau séparés par un isolant. Avantageusement tous les fils conducteurs du premier et du deuxième ensemble sont disposés sur le deuxième niveau.

Selon une autre variante le capteur selon l'invention comprend en outre un troisième ensemble comprenant un premier et un deuxième fils conducteurs disposés symétriquement par rapport à l'axe de symétrie et parallèlement respectivement au premier et au deuxième guides d'onde, et disposés sur le premier niveau.

Avantageusement chaque dit guide d'onde est choisi parmi une ligne à microruban, une ligne coplanaire et préférentiellement une ligne coplanaire comportant trois fils conducteurs parallèles entre eux et isolés électriquement des fils conducteurs du premier et du deuxième ensemble, et du troisième ensemble le cas échéant.

Avantageusement le système de détection d'intensité optique est adapté à mesurer en un seul point de ladite trajectoire au moins une population de dits atomes ultrafroids dans un dit état interne.

Avantageusement le système de détection d'intensité optique comporte au moins un laser dont au moins une longueur d'onde correspond à un pic d'absorption de l'intensité lumineuse par lesdits atomes ultrafroids dans un dit état interne.

Préférentiellement la différence entre la longueur de ladite trajectoire fermée suivie par deux dits pièges est inférieure à la longueur de de Broglie desdits atomes ultrafroids, préférentiellement inférieure à 80% de la longueur de de Broglie desdits atomes et préférentiellement inférieure à 50% de la longueur de de Broglie desdits atomes.

La description suivante présente plusieurs variantes de réalisation du dispositif de l'invention au niveau de la topologie des fils conducteurs et des guides hyperfréquences également dénommés guides micro-ondes. Ces variantes présentent à la fois les caractéristiques essentielles de l'invention ainsi que des caractéristiques additionnelles liées aux modes de réalisation considérés. Par souci de clarté, les mêmes éléments porteront les mêmes repères dans les différentes figures.

Comme précisé précédemment, on définit par atomes ultrafroids thermiques des atomes ultrafroids mais dont la température n'est pas suffisamment faible pour observer des atomes dans un état condensé. Des atomes sont considérés comme ultrafroids dans la suite de la description quand leur température est inférieure à 400 nanokelvins, préférentiellement à 300 nanokelvins. Dans l'ensemble des réalisations de l'invention, les atomes considérés sont ultrafroids thermiques ou condensés et avantageusement ultrafroids thermiques. Avantageusement, la température d'atomes ultrafroids thermiques est, par exemple pour des atomes de Rubidium, comprise entre 50 et 400 nanokelvins et préférentiellement entre 100 et 300 nanokelvins.

L'invention sera mieux comprise et d'autres avantages, détails et caractéristiques de celle-ci apparaîtront au cours de la description explicative qui suit, faite à titre d'exemple en référence aux dessins annexés dans lesquels:

- La figure 1 illustre la topologie de fils/guide d'onde hyper d'un capteur à atomes froids selon l'état de la technique.
- La figure 2 illustre schématiquement une puce à atomes ultrafroids selon une première variante de l'invention ainsi que la trajectoire de deux nuages atomiques.
- La figure 3 illustre schématiquement les potentiels respectifs des deux pièges à atomes (figure 3a), et la disposition correspondante des fils conducteurs/guide d'onde imprimés sur une puce, en vue de profil (figure 3b) et en vue de dessus (figure 3c) selon la première variante de l'invention.
- La figure 4a illustre un mode de réalisation de la première variante de l'invention, et la figure 4b un autre mode de réalisation préféré de la première variante.
- La figure 5 présente schématiquement une séquence du déplacement de chacun des nuages d'atomes ultrafroids pour la première variante de l'invention, la figure 5a pour un mode de réalisation, la figure 5b pour un autre mode de réalisation de l'invention.
- La figure 6 illustre une séquence des différents courants appliqués à des fils conducteurs, des puissances appliquées aux guides d'onde et des fréquences appliquées aux guides d'onde de la puce, selon la première variante de l'invention.
- La figure 7 illustre un mode de réalisation de la deuxième variante selon l'invention,
- La figure 8 présente schématiquement une séquence du déplacement de chacun des nuages d'atomes ultrafroids pour cette deuxième variante de l'invention,
- La figure 9 illustre une séquence des différents courants appliqués aux fils conducteurs, des puissances appliquées aux guides d'onde et des fréquences appliquées aux guides d'onde de la puce, selon la deuxième variante de l'invention,
- La figure 10 illustre une troisième variante de l'invention.
- La figure 11 présente schématiquement une séquence du déplacement de chacun des nuages d'atomes ultrafroids pour cette troisième variante de l'invention.
- La figure 12 illustre une séquence des différents courants appliqués aux fils conducteurs, des puissances appliquées aux guides d'onde et des fréquences appliquées aux guides d'onde de la puce, selon la troisième variante de l'invention.

- La figure 13 illustre un autre mode de réalisation de l'invention, la figure 13a illustrant ce mode appliqué à la première variante pour des fils du deuxième ensemble perpendiculaires, et la figure 13b illustrant ce mode appliqué à la première variante pour des fils du deuxième ensemble non perpendiculaires.
- La figure 14 présente schématiquement une séquence du déplacement de chacun des nuages d'atomes pour ce mode de réalisation appliqué à la première variante.
- La figure 15 illustre une séquence des différents courants appliqués aux fils conducteurs, des puissances appliquées aux guides d'onde et des fréquences appliquées aux guides d'onde de la puce, selon ce mode de réalisation appliqué à la première variante de l'invention.
- La figure 16 illustre cet autre mode de réalisation de l'invention, appliqué à la deuxième variante.
- La figure 17 présente schématiquement une séquence du déplacement de chacun des nuages d'atomes ultrafroids pour ce mode de réalisation appliqué à la deuxième variante de l'invention.
- La figure 18 illustre une séquence des différents courants appliqués aux fils conducteurs, des puissances appliquées aux guides d'onde et des fréquences appliquées aux guides d'onde de la puce, selon cet autre mode de réalisation de l'invention appliqué à la deuxième variante.
- La figure 19 illustre cet autre mode de réalisation de deux fils additionnels coplanaires avec les guides d'onde, appliqué à la troisième variante de l'invention.
- La figure 20 présente schématiquement une séquence du déplacement de chacun des nuages d'atomes ultrafroids pour ce mode de réalisation appliqué à la troisième variante de l'invention.
- La figure 21 illustre une séquence des différents courants appliqués aux fils conducteurs, des puissances appliquées aux guides d'onde et des fréquences appliquées aux guides d'onde de la puce, selon cet autre mode de réalisation de l'invention appliqué à la troisième variante.

La figure 2 illustre schématiquement une puce 1 à atomes ultrafroids 12 selon une première variante de l'invention ainsi que la trajectoire 16 de deux nuages atomiques selon cette variante. Une partie de la surface de la puce 1 forme un plan de mesure 13. Un axe normal au plan de mesure 13 définit l'axe de mesure 14, selon lequel une mesure de rotation est réalisée par le gyromètre.

La puce à atomes 1 est placée dans une enceinte à vide entretenu, par exemple, à l'aide d'une pompe ionique et comportant préférentiellement un blindage magnétique. L'enceinte à vide comporte une source d'atomes ultrafroids. La source d'atomes ultrafroids est définie par :

- un émetteur d'atomes (*dispenser* en anglais), par exemple réalisé par un filament chauffant délivrant une vapeur de rubidium ;
- un piège primaire à atomes (optique et/ou magnétique), permettant de pré-refroidir et de disposer un nuage d'atomes ultrafroids au voisinage de la puce, pour charger en atomes les pièges magnétiques T1 et T2 décrits ultérieurement.

L'enceinte à vide comporte également une source de champ magnétique, extérieure à la puce 1. Elle permet d'imposer un champ magnétique homogène et stationnaire 20 sur une épaisseur au moins de l'ordre de h au dessus du plan de mesure 13. Avantageusement, la direction du champ magnétique homogène est parallèle au plan de mesure.

La puce 1 comprend également des moyens adaptés à générer un premier piège à atomes ultrafroids T1 et un deuxième piège à atomes ultrafroids T2, un piège permettant d'immobiliser un nuage d'atomes ultrafroids 12 dans un état interne différent de l'autre piège, à une distance prédéterminée h dudit plan de mesure 13. Par exemple le piège T1 comprend les atomes dans l'état |a> et le piège T2 comprend des atomes dans l'état |b>.

Ces moyens comprennent au moins un premier guide d'onde CPW1 et un deuxième guide d'onde CPW2 adaptés à la propagation de micro-ondes à des pulsations $\omega_a$ et $\omega_b$. Les guides d'onde sont non sécants et disposés symétriquement par rapport à un axe dénommé axe de symétrie Sy. La configuration la plus simple, mais non limitative, est telle que les deux guides d'onde sont parallèles entre eux, tel qu'illustré figure 2.

Les moyens pour générer les deux pièges comprennent également des fils conducteurs intégrés à la puce 1 et adaptés à être traversés par des courants continus. Les fils conducteurs sont répartis selon un premier ensemble E1 comprenant au moins un fil conducteur et un deuxième ensemble E2 comprenant une pluralité de n fils conducteurs parallèles entre eux, n étant au moins égal à 2. Dans l'exemple de la figure 2 n=3, soit trois fils conducteurs Wld1, Wld2 et Wld3.

Les fils conducteurs du premier ensemble peuvent être agencés selon plusieurs variantes. Selon une première variante illustrée figure 2, le premier ensemble est constitué d'un fil conducteur unique Wlz coïncidant avec l'axe de symétrie Sy. D'autres variantes seront décrites ultérieurement. Les deux ensembles de fils sont agencés de sorte qu'au moins un fil conducteur du premier ensemble n'est pas parallèle aux fils conducteurs Wld1, Wld2, Wld3 du deuxième ensemble, définissant n points de croisement, ici 3 points de croisement C1, C2, C3 entre un fil conducteur du premier ensemble et un fil conducteur du deuxième ensemble. L'agencement est en outre tel que tous les points de croisement sont localisés sur l'axe de symétrie Sy.

Chaque fil conducteur est relié à un ou plusieurs générateurs de courant et/ou de tension, eux-mêmes reliés à une unité de traitement comportant au moins un microprocesseur. Les générateurs de tension et/ou de courant permettent de piloter aussi bien des courants continus que des courants alternatifs dans les fils. En particulier, des courants continus sont pilotés dans les fils conducteurs.

Selon un mode de réalisation préféré, les fils du premier et du deuxième ensemble sont disposés sur un même niveau et à chaque point de croisement il existe un contact électrique entre le fil conducteur du premier ensemble et le fil conducteur du deuxième ensemble constituant le point de croisement. Dans ce cas il convient d'utiliser des alimentations flottantes de manière à maîtriser le courant dans chacun des fils. Ce mode est le plus simple à réaliser (un seul niveau de métallisation commun aux deux ensembles).

Selon un autre mode de réalisation les fils conducteurs du premier et du deuxième ensemble sont disposés sur des niveaux différents, séparés par une couche d'isolant électrique.

Les deux guides d'ondes CPW1 et CPW2 sont adaptés à la propagation de micro-ondes de pulsations $\omega_a$ et $\omega_b$, et connectés à au moins un générateur de tension ou de courant à fréquences micro-ondes.

Selon un mode de réalisation, chacun des guides d'onde est réalisé par le dépôt de trois fils conducteurs parallèles pour réaliser un guide d'onde coplanaire. Dans d'autres réalisations de l'invention, on peut utiliser d'autres types de guides d'onde, en particulier des guides d'onde dont la fabrication est compatible avec les techniques de microfabrication par dépôt ou par gravure. On peut, par exemple, réaliser une ligne à microruban.

En outre lesdits moyens sont configurés pour modifier l'énergie des atomes ultrafroids 12 de manière :

- à créer un minima de potentiel pour les atomes ultrafroids dans l'état interne |a> et un minima de potentiel pour les atomes ultrafroids dans l'état interne |b>, formant ainsi le premier piège à atomes ultrafroids T1 et le deuxième piège à atomes ultrafroids T2 ;
- et à déplacer les pièges T1 et T2 suivant une trajectoire fermée 16 définissant une aire A, parcourue dans un sens par les atomes ultrafroids du premier piège et dans le sens opposé par les atomes ultrafroids du deuxième piège.

Sur la figure 2 la trajectoire 16 en pointillés illustre la trajectoire des nuages d'atomes ultrafroids 12. Cette trajectoire fermée définit une aire notée A. Une distance h sépare le plan de la trajectoire 16 et le plan de mesure 13 de la puce. Préférentiellement h est compris entre 500 nm et 1 mm, et préférentiellement entre 5 $\mu$m et 500 $\mu$m.

L'agencement spécifique des fils conducteurs et des guide d'onde, associé à la source de champ magnétique homogène, permet d'obtenir aisément deux pièges T1 et T2 présentant une valeur du minimum V0 non nulle et identique, et une courbure identique, condition nécessaire pour que le capteur fonctionne, comme expliqué plus haut. En effet, comme expliqué plus loin, lorsqu'un courant continu est appliqué sur au moins deux fils conducteurs d'un point de croisement, le minimum de potentiel est localisé à la verticale de ce point de croisement. Lorsqu'ensuite une puissance hyperfréquence est envoyée dans les guides d'onde, le minimum central se transforme en deux minima de part et d'autre du minimum initial dans la direction des guides d'onde. Si le minimum initial n'est pas situé strictement à égale distance des deux guides d'ondes, les deux minima de potentiels créés n'auront pas rigoureusement la même valeur du minimum V0 et la même courbure.

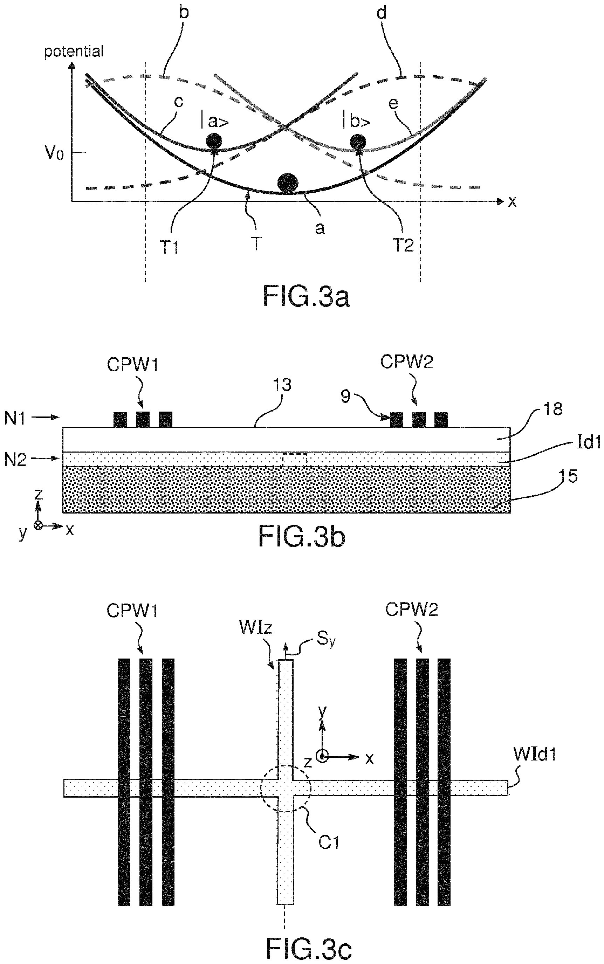

La figure 3 illustre schématiquement les positions respectives des différents minima selon un exemple de la première variante de l'invention, au voisinage du point de croisement initial C1. La figure 3a illustre les potentiels respectifs des deux pièges à atomes. La figure 3b décrit la disposition correspondante des fils conducteurs et des guides d'onde imprimés sur une puce en vue de profil, en coupe selon le fil conducteur WId1 du deuxième ensemble E2, qui croise le fil conducteur unique WIz selon l'axe de symétrie Sy, et la figure 3c décrit la vue de dessus.

Selon cette première variante le premier ensemble comprend un fil conducteur unique WIz traversé par un courant continu $I_Z$. Le second ensemble comprend n fils conducteurs parallèles entre eux, dont un seul est représenté sur la figure 3. L'utilisation d'un seul fil central WIz permet de ne pas avoir à équilibrer les intensités électriques entre deux fils tels que décrit dans la figure 1 de l'état de la technique (fils 8 et 9).

Dans la réalisation de l'invention illustrée dans la figure 2, deux guides d'onde CPW1 et CPW2 sont imprimés sur la puce. Ces guides ne se croisent pas et son disposés symétriquement par rapport à Sy. Avantageusement, les deux guides d'onde sont parallèles entre eux, c'est la configuration la plus simple à réaliser. Avantageusement, les guides d'onde sont des guides d'onde coplanaires situés sur un premier niveau N1. Chacun des guides d'onde coplanaires CPW1 et CPW2 (acronymes anglophones de « CoPlanar Waveguide ») est réalisé par 3 fils conducteurs parallèles entre eux et isolés électriquement des fils conducteurs du premier et du deuxième ensemble.

Les fils conducteurs sécants avec les guides d'ondes sont nécessairement disposés sur un niveau différent de celui des guides d'onde pour éviter tout contact électrique entre fils et guide d'onde. Préférentiellement les fils conducteurs sécants avec les guides d'ondes sont disposés selon un deuxième niveau N2 séparé du premier niveau par une couche d'un isolant électrique 18. Préférentiellement tous les fils conducteurs du premier et du deuxième ensemble sont disposés sur le deuxième niveau N2, c'est la configuration la plus simple à fabriquer.

La couche 18 permet avantageusement d'aplanir le plan de mesure 13. Le matériau de la couche d'isolant électrique peut être par exemple du dioxyde de silicium, du nitrure de silicium ou benzocyclobutene.

Un matériau conducteur est utilisé pour la fabrication des fils conducteurs du premier et du deuxième ensemble, par exemple de l'or, et est déposé sur un substrat 15. Dans des réalisations de l'invention, le substrat peut être par exemple en silicium, en nitrure d'aluminium ou en carbure de silicium.

La figure 3a illustre la séparation symétrique d'atomes ultrafroids, spécifique à l'état interne desdits atomes ultrafroids. Plus précisément la figure 3a illustre les variations de potentiels en fonction de l'axe x de la puce 1. La courbe « a » en noir présente un puits de potentiel correspondant à l'association du champ magnétique homogène et du champ créé par deux fils conducteurs sécants, un fil WIz du premier ensemble parcouru par le courant $I_Z$ et l'autre fil WId1 du deuxième ensemble parcouru par le courant Id1. Il résulte un puits de potentiel local formant un piège atomique T selon trois dimensions. Un nuage d'atomes ultrafroids peut y être piégé et refroidi.

La courbe « b » en pointillés gris clair présente de manière schématique le potentiel créé par la transmission de micro-ondes à la fréquence $\omega_b$ dans le guide d'onde CPW1. Le champ émis par le passage de micro-ondes à la fréquence $\omega_b$ permet de modifier l'énergie des atomes ultrafroids et de déplacer les atomes d'états internes |b>. Dans cette réalisation de l'invention, la fréquence $\omega_b$ est choisie de manière à imposer avantageusement un champ répulsif aux états internes |b> des atomes ultrafroids 12. Dans une autre réalisation de l'invention, on peut imposer un champ attractif aux états internes |b> par imposition d'une fréquence $\omega_b$' différente de $\omega_b$. Cette méthode de séparation d'atomes ultrafroids spécifique à l'état interne desdits atomes est décrite par Ammar *et al.* (Ammar, M., Dupont-Nivet, M., Huet, L., Pocholle, J. P., Rosenbusch, P., Bouchoule, I., ... & Schwartz, S., 2015, Symmetric micro-wave potentials for interferometry with thermal atoms on a chip. PHYSICAL REVIEW A 91, 053623), dans le cas de la réalisation d'un accéléromètre unidirectionnel à interférométrie d'atomes ultrafroids thermiques.

La courbe « e » en trait continu gris clair illustre le potentiel vu par les états internes |b> dus aux contributions des potentiels illustrés par la courbe « a » et par la courbe « b ». La courbe « e » présente un minimum local de potentiel permettant de piéger localement un nuage d'atomes ultrafroids d'états internes |b>.

De manière similaire, la courbe « d » en pointillés gris foncé présente de manière schématique le potentiel créé par la transmission de micro-ondes à la fréquence $\omega_a$ dans le guide d'onde CPW2. Le champ émis par le passage de micro-ondes à la fréquence $\omega_a$ permet de modifier l'énergie des atomes ultrafroids et de déplacer les atomes d'états internes |a>. Dans cette réalisation de l'invention, la fréquence $\omega_a$ est choisie de manière à imposer avantageusement un champ répulsif aux atomes d'états internes |a> des atomes ultrafroids 12. Dans une autre réalisation de l'invention, on peut imposer un champ attractif aux atomes d'états internes |a> par imposition d'une fréquence $\omega_a$' différente de $\omega_a$.

La courbe « c » en trait continu gris foncé illustre le potentiel vu par les atomes d'états internes |a> dû aux contributions des potentiels illustrés par la courbe « a » et par la courbe « d ». La courbe « c » présente un minimum local d'énergie permettant de piéger localement un nuage d'atomes ultrafroids d'états internes |a>.

Dans une réalisation de l'invention, les nuages d'atomes ultrafroids d'états internes |a> et |b> peuvent être séparés et piégés de manière symétrique par rapport à l'axe de symétrie Sy en imposant simultanément la propagation d'ondes de fréquence $\omega_a$ dans CPW2 et $\omega_b$ dans CPW1. Pour obtenir deux pièges dont les minima sont de même valeur V0 et dont les courbures sont de même valeur, il est important que le point de croisement C1 soit disposé à égale distance de CPW1 et CPW2, sur l'axe de symétrie Sy.

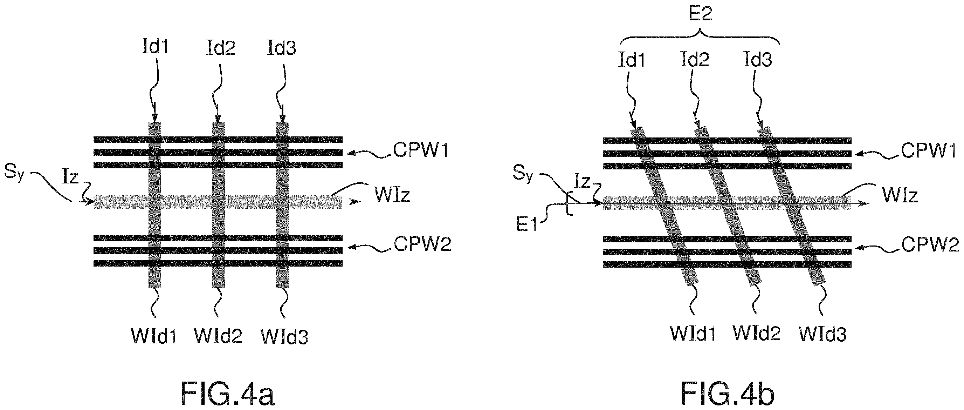

Sur la figure 3a selon un mode de réalisation le fil WId1 du deuxième ensemble est perpendiculaire au fil WIz du premier ensemble. Ce mode de réalisation est également illustré figure 4a avec n=3 fils WId1, WId2, WId3, du deuxième ensemble traversés respectivement par des courants $I_{d1}$, $I_{d2}$ et $I_{d3}$.

Selon un autre mode de réalisation préféré illustré figure 4b, les fils du deuxième ensemble ne sont pas perpendiculaires au(x) fil(s) du premier ensemble. Ce mode de réalisation est préféré car avec cette géométrie, la partie magnétique DC des deux pièges générés forme un piège connu dans la littérature sous le nom de « dimple » et dont les axes propres peuvent être orientés parallèlement ou perpendiculairement à l'axe de symétrie Sy. Ce type de piège est connu pour être suffisamment confinant pour :

- permettre un refroidissement efficace des atomes
- permettre le respect des conditions de suivi adiabatique, i.e. le déplacement des pièges peut s'effectuer rapidement c'est-à-dire dans un temps plus court que le temps de cohérence de la source atomique.

Il est bien connu que les pièges de type « dimple » présentent un minimum avec un champ magnétique non nul. Cela a pour effet de supprimer des pertes dites de Majorana permettant ainsi un refroidissement efficace, et de réaliser une superposition cohérente entre les deux états de l'interféromètre.

Le document CN102927978 ne présente pas de tels avantages. Pour ne pas avoir de terme dans la phase qui provienne d'une différence d'énergie du minimum des deux pièges pour les deux états internes, les courants dans les deux fils 9 et 8 doivent être parfaitement égaux.

La partie magnétique DC du piège utilisé dans CN102927978, qui est créée à l'aide des fils 9-8-gi (où i est compris entre 1 et n), est très peu confinante suivant l'axe y. Il en résulte les problèmes suivants :

- le refroidissement des atomes dans ce piège est inefficace.
- pour respecter les conditions de suivi adiabatique pour le déplacement des pièges, la séparation des deux pièges doit se faire très lentement. Typiquement ce temps sera plus long que le temps de cohérence de la source atomique utilisée, qu'elle soit condensée ou non. Aucune mesure ne peut donc être réalisée.

En outre la partie magnétique DC du piège utilisé dans CN102927978 présente un zéro de champ magnétique à son minimum. Il en résulte deux conséquences sur le fonctionnement de la puce décrite :

- des pertes atomiques très importantes pendant la phase de refroidissement (effet Majorana).
- comme les deux états de l'interféromètre sont deux sous-niveaux Zeeman et qu'à un zéro de champ magnétique tous les niveaux Zeeman sont dégénérés, il est impossible de réaliser une superposition cohérente propre entre les deux états de l'interféromètre et donc d'initialiser le capteur.

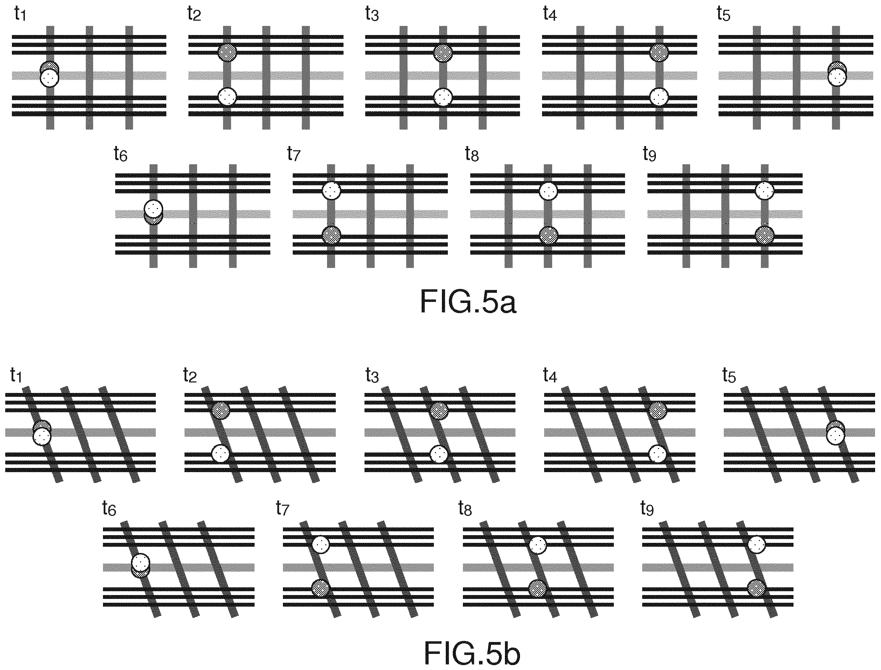

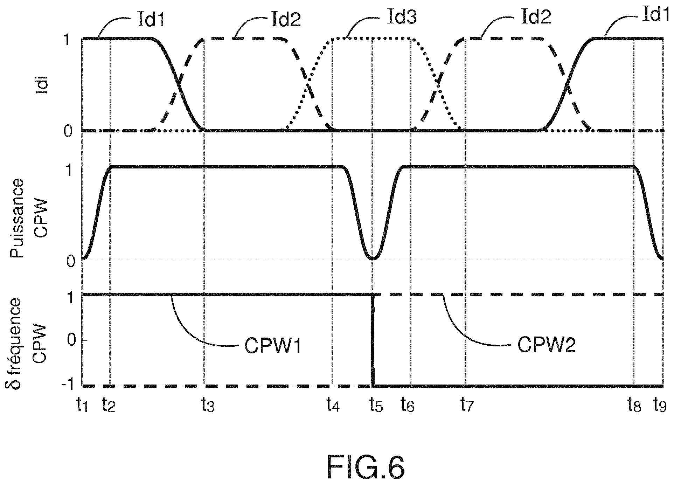

La figure 5 présente schématiquement une séquence du déplacement de chacun des nuages d'atomes ultrafroids selon la première variante de l'invention. La figure 5a correspond au mode de réalisation dans lequel les fils conducteurs du deuxième ensemble sont perpendiculaires au fil unique du premier ensemble, la figure 5b correspond au mode de réalisation préféré non perpendiculaire. Chaque schéma correspond à un temps caractéristique de la séquence, annoté de $t_1$ à $t_9$. La figure 6 illustre de manière complémentaire une séquence des différents courants appliqués aux fils conducteurs, des puissances appliquées aux guides d'onde et des fréquences imposées aux guides d'onde, selon la première variante de l'invention (identique pour les deux modes de réalisation). Cette séquence est illustrée sur la figure 6 pour les temps correspondant à ceux de la figure 5, annotés de $t_1$ à $t_9$.

Dans la séquence présentée dans les figures 5 et 6, le courant $I_z$, non présenté, est stationnaire, à une valeur constante. De plus, la séquence décrite dans les figures 5 et 6 peut être avantageusement répétée de manière périodique. Les différentes pulsations des guides d'ondes peuvent être appliquées de manière périodique et les différents potentiels aux bornes des fils conducteurs peuvent être appliqués de manière périodique. Dans la figure 6, les valeurs des courants, des puissances et des fréquences sont arbitraires. L'ordonnée $\delta$ fréquence correspond à une variation de fréquence exprimée en unité arbitraire, autour d'une valeur moyenne de la fréquence. Dans des réalisations de l'invention, les courants parcourant les fils conducteurs peuvent être compris entre 100 $\mu$A et 10 A, et les pulsations injectées dans les guides d'onde peuvent être comprises entre 6,6 GHz et 7 GHz dans le cas de l'utilisation d'atomes de rubidium.

A $t_1$, les courants $I_z$ et $I_{d1}$ sont imposés respectivement aux fils conducteurs WIdz et WId1. Les deux états internes |a> et |b> sont superposés spatialement. Le nuage d'atomes d'états internes |a> est symbolisé par un disque de texture claire et le nuage d'atomes d'états internes |b> est symbolisé par un disque de texture plus foncée.

Pour obtenir un nuage d'atomes ultrafroids comportant les deux états internes superposés tel que schématisés en t1, un nuage d'atomes ultrafroids est préalablement généré dans l'enceinte. Des atomes peuvent être d'abord libérés par le « dispenser » ; puis piégés et pré-refroidis par le piège primaire à atomes. Le nuage d'atomes ultrafroids 12 peut être ensuite chargé dans le piège initial T à la position décrite à $t_1$. Le piège initial, à cette étape, se trouve à une distance h du plan de mesure 13, et dans une projection sur le plan de mesure, à l'intersection des premiers fils potentiellement traversés par les courants $I_z$ et $I_{d1}$. La hauteur h est différente de 0 (car le champ magnétique homogène 20 est non nul) et peut varier lors du parcours d'un piège sur la puce. Comme divulgué en détail par Tannoudji, C. C, l'état interne des atomes peut être initialisé par une première impulsion électromagnétique, permettant d'imposer un seul état interne à l'ensemble des atomes ultrafroids (appelé sous-niveau Zeeman). Cette initialisation peut être réalisée par des faisceaux laser ou par une émission micro-ondes.

Une seconde impulsion est ensuite appliquée au nuage d'atomes, appelée impulsion $\pi/2$ : elle permet d'obtenir un nuage d'atomes comportant une superposition cohérente d'états internes |a> et |b>. Cette impulsion peut être réalisée par un laser, une émission micro-ondes, ou plus généralement par une méthode émettant des ondes à une fréquence de transition adaptée.

Entre $t_1$ et $t_2$, la puissance micro-ondes injectée dans les guides d'onde CPW1 et CPW2, passe progressivement de 0 à sa valeur maximale. Une pulsation $\omega_a$ est envoyée dans le guide d'onde CPW1 et une pulsation $\omega_b$ est envoyée dans le guide d'onde CPW2, ce qui permet de séparer les deux nuages d'états internes différents de part et d'autre de l'axe de symétrie 19, jusqu'aux positions schématisées dans $t_2$. Le piège T à atomes ultrafroids décrit précédemment à l'instant $t_1$ est alors transformé en deux pièges T1 et T2 à atomes ultrafroids, chaque piège permettant d'immobiliser un nuage d'atomes ultrafroids d'états internes différents de l'autre piège (en l'occurrence d'états internes |a> dans l'un des pièges, par exemple T1, et d'états internes |b> dans l'autre piège T2, comme décrit dans la figure 3a).

Entre $t_2$ et $t_3$, le courant $I_{d1}$ est progressivement coupé et $I_{d2}$ est progressivement porté à sa valeur maximale (l'intervalle de temps séparant $t_2$ et $t_3$ est typiquement de l'ordre de 10 ms et peut être compris entre 0,1 ms et 100 ms : les deux pièges T1 et T2 sont déplacés vers la droite jusqu'aux positions schématisées dans $t_3$.

Entre $t_3$ et $t_4$ le courant $I_{d2}$ est progressivement coupé et $I_{d3}$ est progressivement porté à sa valeur maximale : les deux pièges sont déplacés vers la droite jusqu'aux positions schématisées dans $t_4$. Dans d'autres réalisations de l'invention, cette opération peut être répétée plusieurs fois avec d'autres fils conducteurs dans le deuxième ensemble pour augmenter l'aire incluse dans la trajectoire 16.

Entre $t_4$ et $t_5$, la puissance micro-onde est progressivement coupée : les deux pièges sont ramenés au même endroit de la puce, schématisé dans $t_5$.

A $t_5$, les pulsations des deux guides micro-ondes sont modifiées : la pulsation $\omega_b$ est imposée dans CPW1 et la pulsation $\omega_a$ est imposée dans CPW2.

Entre $t_5$ et $t_6$, la puissance dans les deux guides d'onde passe progressivement de 0 à sa valeur maximale : les pièges sont séparés dans la direction verticale comme schématisé dans la figure $t_6$.

Entre $t_6$ et $t_7$, le courant $I_{d3}$ est progressivement coupé et $I_{d2}$ est progressivement porté à sa valeur maximale : les deux pièges T1 et T2 sont déplacés vers la gauche jusqu'aux positions schématisées dans $t_7$.

Entre $t_7$ et $t_8$, le courant $I_{d2}$ est progressivement coupé et $I_{d1}$ est progressivement porté à sa valeur maximale: les deux pièges sont déplacés vers la gauche jusqu'aux positions schématisées dans $t_8$. Dans d'autres réalisations de l'invention, cette opération peut être répétée plusieurs fois avec d'autres premiers fils conducteurs pour augmenter l'aire incluse dans la trajectoire 16.

Entre $t_8$ et $t_9$, la puissance micro-onde dans les guides d'onde est progressivement coupée. Les deux pièges T1 et T2 se déplacent verticalement jusqu'à fusionner en un seul piège se situant au point de départ schématisé en $t_1$.

Soit les n fils du deuxième ensemble indicés i WIdi, on applique donc des courants continus aux deux fils correspondant au point de croisement initial C1, et au cours du temps on applique successivement ces courants aux différents points de croisements Ci situés sur l'axe de symétrie, en appliquant simultanément une puissance microonde sur les guides d'ondes. Les deux pièges T1 et T2 se déplacent donc dans le sens « d'allumage » des points de croisement : du point de croissement Ci vers le point de croisement Cn. Dans les réalisations présentées sur la figure 4 un point de croisement Ci est constitué du couple (Wdz, WIdi). Le retour s'effectue en inversant les fréquences microonde et en allumant les courants continus successivement dans les fils correspondants aux différents points de croisement en les parcourant de Cn vers C1.

On fait ainsi parcourir aux pièges la trajectoire fermée 16 décrite précédemment, puis on réalise une mesure de la phase Sagnac. Dans des réalisations différentes de l'invention, on peut faire parcourir aux pièges cette trajectoire N fois avant de mesurer la phase Sagnac et ainsi mesurer une phase qui sera potentiellement plus élevée.

Afin de garder une cohérence permettant une mesure interférentielle, la différence entre la longueur des trajectoires totales parcourues par les atomes ultrafroids |a> et les atomes ultrafroids |b> doit être inférieure à la longueur de de Broglie des atomes ultrafroids. Avantageusement, cette différence peut être inférieure à 80 % de la longueur de de Broglie des atomes ultrafroids et préférentiellement inférieure à 50 % de la longueur de de Broglie des atomes ultrafroids.

Cette condition est d'autant plus difficile à respecter que le nombre N de tours est élevé. En effet dans ce cas l'égalisation entre les courbures des minima de potentiels des pièges T1 et T2 doit être N fois meilleure pour garantir un temps de cohérence de la source atomique utilisée supérieur à la durée de la mesure.

On réalise ensuite une seconde impulsion $\pi/2$. Lorsque toutes les sources de déphasage autres que l'effet Sagnac sont supprimées ou rendues communes pour les deux états internes |a> et |b>, l'état interne résultant pour les atomes ultrafroids est alors donné par :

$$\frac{1}{2}\left[(1 - e^{-i\theta})|a> - i(1 + e^{-i\theta})|b>\right].$$

Pour mesurer la phase Sagnac, les deux populations d'atomes d'états internes |a> et |b> sont mesurées en un point, par exemple le point de départ de la séquence décrite dans la figure 5. Cette mesure peut être effectuée par exemple par absorption laser en sondant la résonance entre la pulsation propre à un état interne et celle du laser.

La mesure des populations d'atomes dans chacun des états |a> et |b> permet, considérant l'équation 1 de déterminer la phase Sagnac selon, par exemple, pour l'état interne |a> :

$$P(|a>) = (1 + \cos(\theta))/2 \qquad (2)$$

Cette méthode, utilisant la mesure d'au moins une population d'atomes dans un état interne spécifique en un point de la trajectoire, permet de résoudre un problème technique de l'art antérieur. Avantageusement, deux populations d'atomes d'états internes différents sont mesurées. La réalisation de l'invention simplifie considérablement cette mesure, qui peut être réalisée uniquement par une ou plusieurs photodiodes adaptées à mesurer, à un endroit donné de la trajectoire, l'absorption d'un faisceau laser. On peut ainsi déduire la vitesse de rotation de la puce 1.

Les atomes ultrafroids des réalisations de l'invention sont avantageusement des atomes ultrafroids thermiques. L'utilisation d'atomes ultrafroids thermiques, c'est-à-dire non condensés, permet de réduire une dépendance non linéaire, dans le cas de l'utilisation d'atomes condensés, entre la phase Sagnac et la population d'atomes à un état interne donné.

Les séquences de la figure 5 et de la figure 6 détaillent la réalisation d'un tour de trajectoire pour chacun des deux pièges. Avantageusement, plusieurs tours de trajectoire peuvent être réalisés par les deux pièges avant la mesure de population atomique correspondant à chaque état interne. L'augmentation du nombre de tours peut permettre d'amplifier la phase Sagnac et de faciliter sa mesure. Cette méthode peut permettre de mesurer la phase Sagnac avec un dispositif de taille limitée et inférieure à celle de l'état de l'art.

L'utilisation de pièges T1 et T2 pour le transport des nuages d'atomes ultrafroids permet de résoudre un problème de l'art antérieur utilisant des guides d'onde circulaires : l'utilisation des pièges permet une propagation des atomes ultrafroids indépendante des rugosités de surface, qui peuvent être la cause de réflexions dans le cas de l'utilisation de guides d'onde.

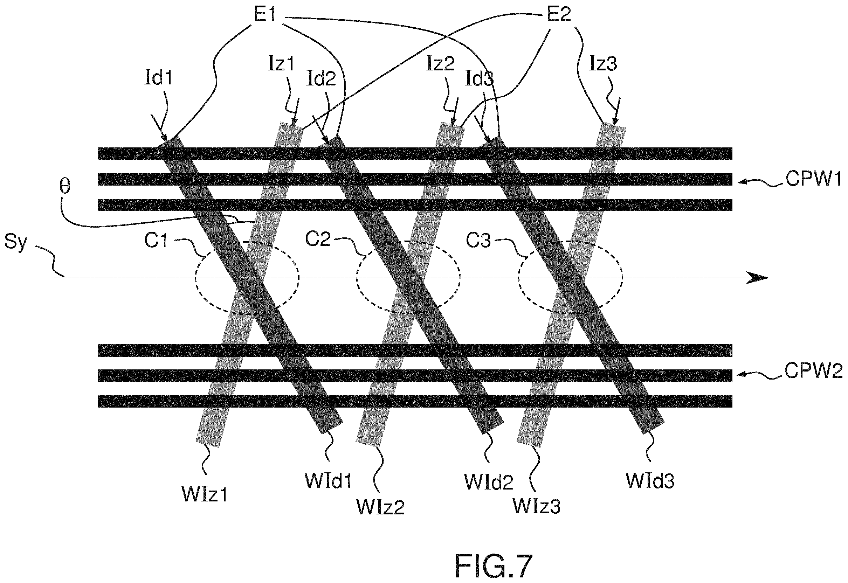

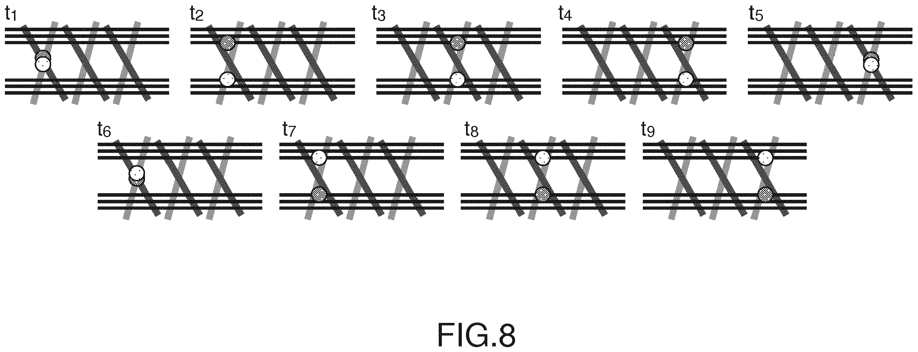

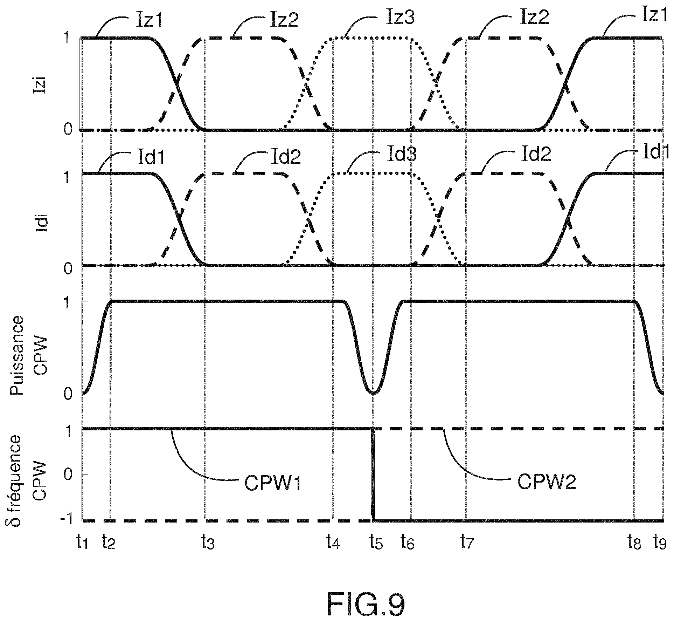

Selon une deuxième variante de l'invention illustrée figure 7 le premier ensemble E1 comprend une pluralité de n (ici n=3) fils conducteurs WIz1, WIz2, WIz3 parallèles entre eux, aptes à être parcourus respectivement par 3 courants continus Iz1, Iz2, Iz3. La figure 8 présente schématiquement une séquence du déplacement de chacun des nuages d'atomes ultrafroids pour cette deuxième variante de l'invention, de la même manière que sur la figure 5 (première variante) et la figure 9 illustre une séquence des différents courants appliqués aux fils conducteurs, des puissances appliquées aux guides d'onde et des fréquences appliquées aux guides d'onde de la puce, selon la deuxième variante de l'invention, de la même manière que sur la figure 6 (première variante).

De même que précédemment, on applique des courants continus aux deux fils correspondant au point de croisement initial, et au fil du temps on applique successivement ces courants aux différents points de croisements situés sur l'axe de symétrie, en appliquant simultanément une puissance microonde sur les guides d'ondes, et les deux pièges T1 et T2 se déplacent dans le sens « d'allumage » des points de croisement. Le retour s'effectue en inversant les fréquences microonde et en allumant les courants continus successivement dans les fils correspondants aux différents points de croisement en les parcourant de Cn vers C1. Pour i variant de 1 à n indiquant les points de croisement Ci. Ici, un point de croisement Ci est associé à un couple de fils (WIzi, WIdi), qui sont donc « allumés » ensemble. Le retour s'effectue en inversant les fréquences microonde et en allumant les courants continus successivement dans les fils correspondants aux différents points de croisement en les parcourant de Cn vers C1.

Cette variante de l'invention permet de disposer d'un degré de liberté supplémentaire (fils WIzi) par rapport à la première variante de l'invention présentée sur la figure 4. Elle permet d'égaliser plus facilement les courbures et les niveaux des minima des potentiels des deux pièges à atomes ultrafroids T1 et T2 et de régler les axes des deux pièges T1 et T2.

Préférentiellement un angle $\ominus$ entre les fils conducteurs du premier ensemble E1 et les fils conducteurs du deuxième ensemble E2 est compris entre 30° et 60°. Cette plage angulaire permet à la fois de rapprocher suffisamment les points de croisement et de réaliser des pièges suffisamment confinants.

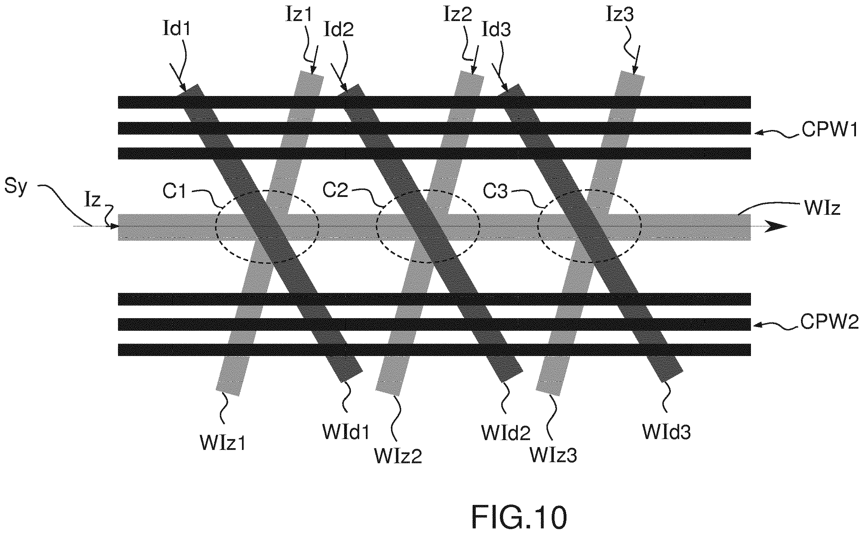

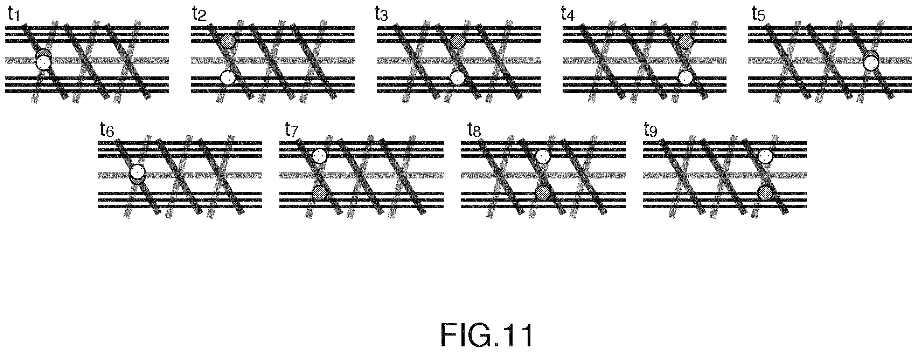

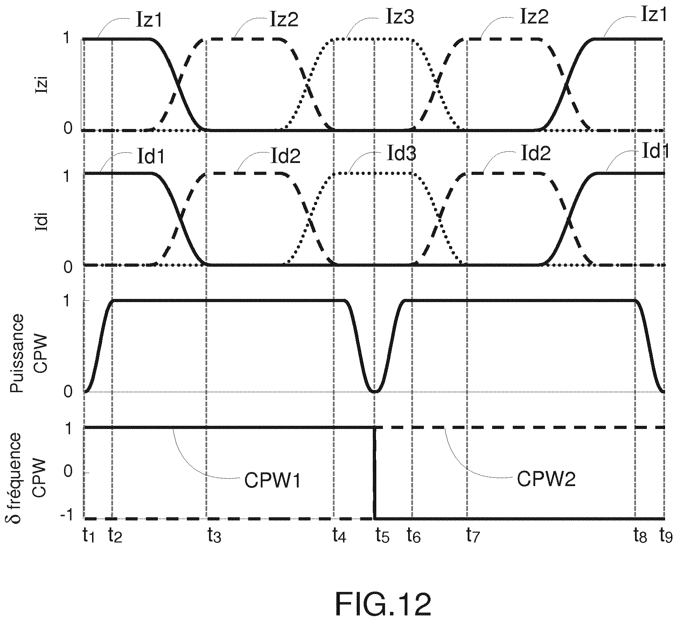

Selon une troisième variante de l'invention illustrée figure 10 le premier ensemble E1 comprend une pluralité de n (ici n=3) fils conducteurs WIz1, WIz2, WIz3 parallèles entre eux, aptes à être parcourus respectivement par 3 courants continus Iz1, Iz2, Iz3 et un fil conducteur WIz coïncidant avec l'axe de symétrie Sy. La figure 11 présente schématiquement une séquence du déplacement de chacun des nuages d'atomes ultrafroids pour cette troisième variante de l'invention, identique au déplacement de la figure 8. La figure 12 illustre une séquence des différents courants appliqués aux fils conducteurs, des puissances appliquées aux guides d'onde et des fréquences appliquées aux guides d'onde de la puce, selon la troisième variante de l'invention. Les courants sont identiques à ceux appliqués pour la deuxième variante, avec en plus un courant Iz d'une valeur constante appliquée à WIz en permanence. Un point de croisement Ci est ici associé à un triplet (WIz, WIzi, WIdi).

Cette configuration présente l'avantage de fournir un degré de liberté supplémentaire pour appliquer le bon potentiel au point de croisement. Elle combine les avantages de la seconde variante présentée sur la figure 7 avec un réglage indépendant de la valeur du minimum de champ magnétique des deux pièges T1 et T2.

Selon un autre mode de réalisation de l'invention, les moyens adaptés à générer un premier et un deuxième piège à atomes ultrafroids comprennent en outre un troisième ensemble E3 de fils conducteurs comprenant un premier fil conducteur WIm1 et un deuxième fil conducteur WIm2 disposés symétriquement par rapport à l'axe de symétrie Sy, et parallèlement respectivement au premier guide d'onde CPW1 et au deuxième guide d'onde CPW2, les fils WIm1 et WIm2 étant disposés sur le même niveau que les guides d'onde, soit le premier niveau N1.

Ce mode de réalisation est compatible avec toutes les variantes précédemment décrites.

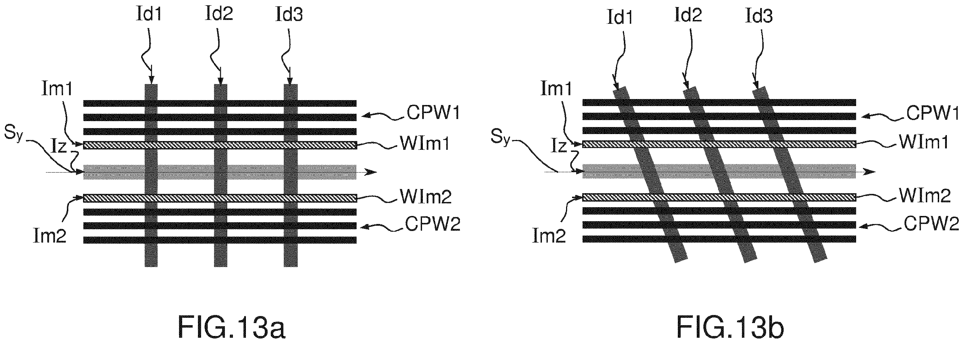

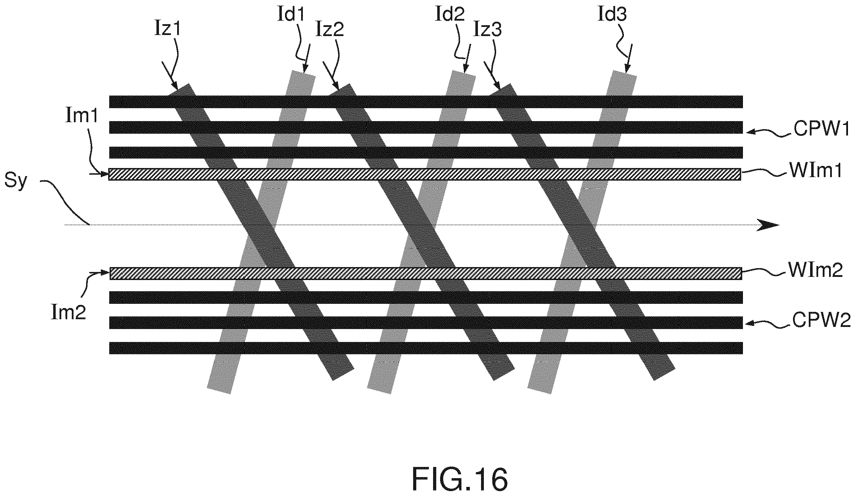

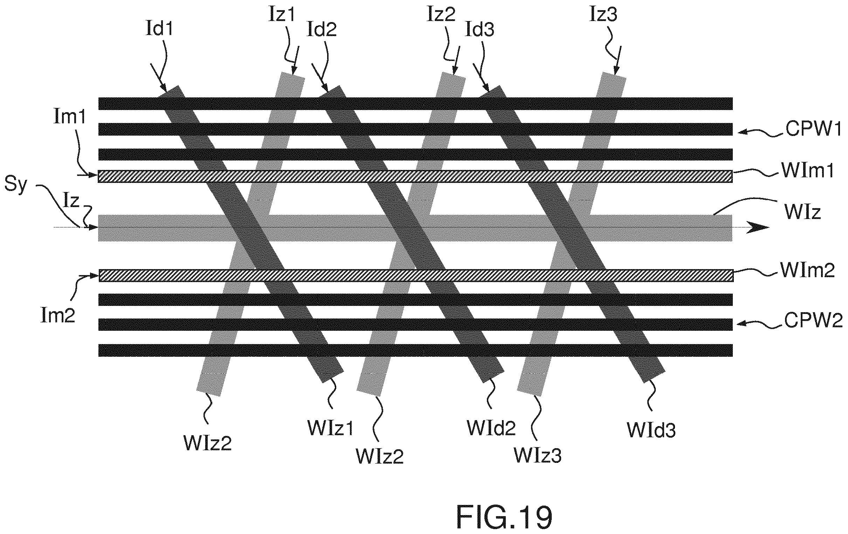

Il est compatible avec la première variante, tel qu'illustré figure 13, la figure 13a pour des fils du deuxième ensemble perpendiculaires au premier ensemble de fils et la figure 13b pour des fils du deuxième ensemble non perpendiculaires au premier ensemble de fils. Il est également compatible avec la deuxième variante tel qu'illustré figure 16 et avec la troisième variante, tel qu'illustré figure 19.

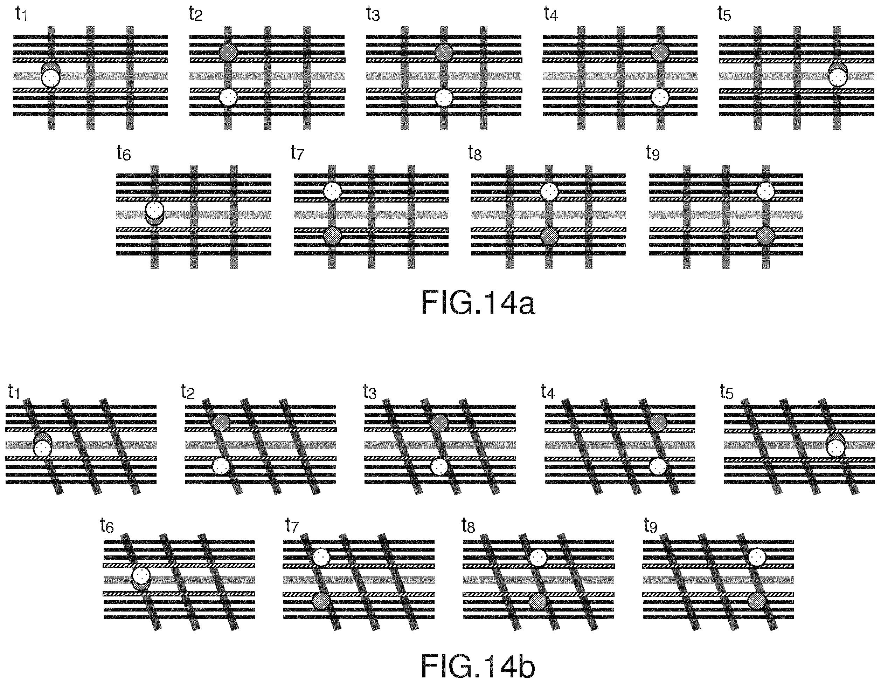

La figure 14 présente schématiquement une séquence du déplacement de chacun des nuages d'atomes ultrafroids pour ce mode de réalisation appliqué à la première variante de l'invention, la figure 14a correspondant à la variante de la figure 13a et la figure 14b à la variante de la figure 13b. Ces déplacements s'opèrent de manière similaire à ceux décrits sur les figures 5a et 5b mais avec une séquence des courants continus et puissances hyperfréquences différente.

Un courant continu $I_z$ à une valeur constante est toujours appliqué à $Wl_z$.

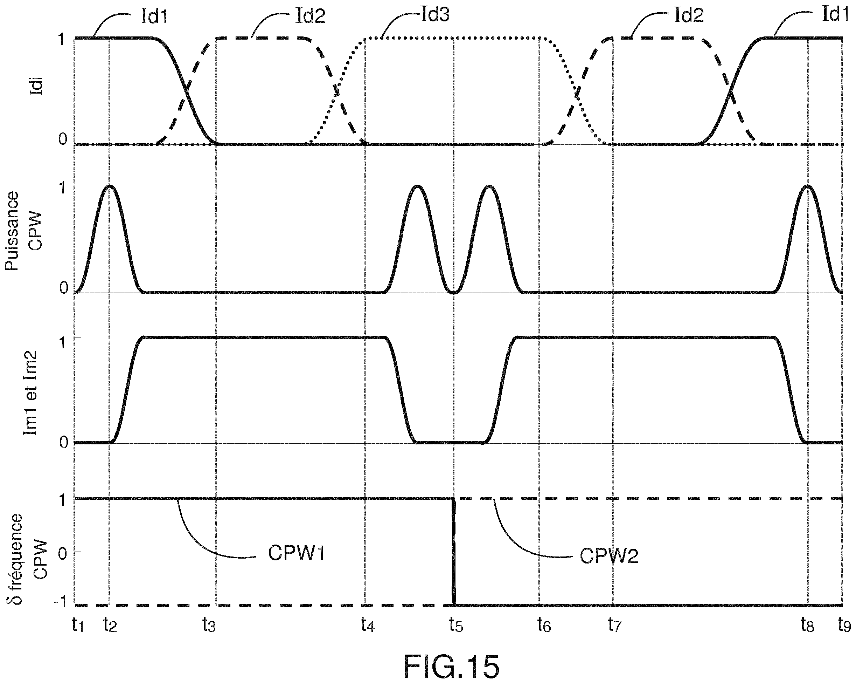

La figure 15 illustre une séquence des différents courants appliqués aux fils conducteurs, des puissances appliquées aux guides d'onde et des fréquences appliquées aux guides d'onde de la puce, selon cet autre mode de réalisation de l'invention appliqué à la première variante.

La puissance hyper fréquence n'est plus appliquée de manière permanente entre $t_2$ et $t_4$ et entre $t_6$ et $t_8$ comme dans la figure 6, mais sous la forme d'impulsions, à $t_2$, avant $t_5$, puis après $t_5$ et à $t_8$ :

- Entre $t_1$ et $t_5$ :

  ◦ entre $t_1$ et $t_2$ la puissance hyper fréquence est progressivement augmentée de zéro à sa valeur maximale. Une fois la valeur maximale atteinte à $t_2$, la puissance hyper fréquence est progressivement diminuée jusqu'à zéro simultanément les courants $I_{m1}$ et $I_{m2}$ parcourant les fils $Wl_{m1}$ et $Wl_{m2}$ sont progressivement augmentés de 0 à leurs valeurs maximales.
  ◦ avant $t_5$ les courants $I_{m1}$ et $I_{m2}$ parcourant les fils $Wl_{m1}$ et $Wl_{m2}$ sont progressivement éteints et simultanément la puissance hyper fréquence est progressivement allumée avant d'être éteinte.

- Entre $t_5$ et $t_9$ :

  ◦ après $t_5$ la puissance hyper fréquence est progressivement augmentée de zéro à sa valeur maximale. Une fois la valeur maximale atteinte, la puissance hyper fréquence est progressivement diminuée jusqu'à zéro simultanément les courants $I_{m1}$ et $I_{m2}$ parcourant les fils $Wl_{m1}$ et $Wl_{m2}$ sont progressivement augmentés de 0 à leurs valeurs maximales.
  ◦ avant $t_9$ les courants $I_{m1}$ et $I_{m2}$ parcourant les fils $Wl_{m1}$ et $Wl_{m2}$ sont progressivement éteints et simultanément la puissance hyper fréquence est progressivement allumée avant d'être éteinte.

Cette variante permet de s'affranchir des problèmes de stabilisation des puissances hyper fréquence. En effet la puissance hyper fréquence ne sert plus qu'à effectuer la séparation et la recombinaison des nuages d'atomes ultrafroids dans les états internes |a> et |b>, une fois la séparation effectuée les pièges T1 et T2 sont créés uniquement par exemple pour la variance présentée sur la figure 13 par l'ensemble de fils $Wl_z$, $Wl_{m1}$, $Wl_{m2}$ et $Wl_{di}$ qui sont parcourus par des courants DC plus faciles à stabiliser.

Avantageusement les fils $Wl_{m1}$ et $Wl_{m2}$ sont parallèles aux guides d'ondes pour créer les pièges T1 et T2 à une position identique à la première variante présentée sur la figure 4 et n'ayant pas le troisième ensemble de fils.

La figure 16 illustre cet autre mode de réalisation de deux fils additionnels coplanaires avec les guides d'onde appliqué à la deuxième variante de l'invention.

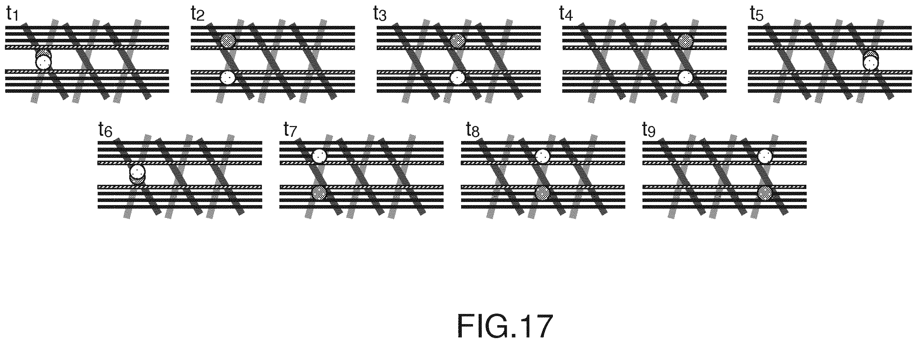

La figure 17 présente schématiquement une séquence du déplacement de chacun des nuages d'atomes ultrafroids pour ce mode de réalisation appliqué à la deuxième variante de l'invention, qui s'opère de manière similaire à celui de la figure 8.

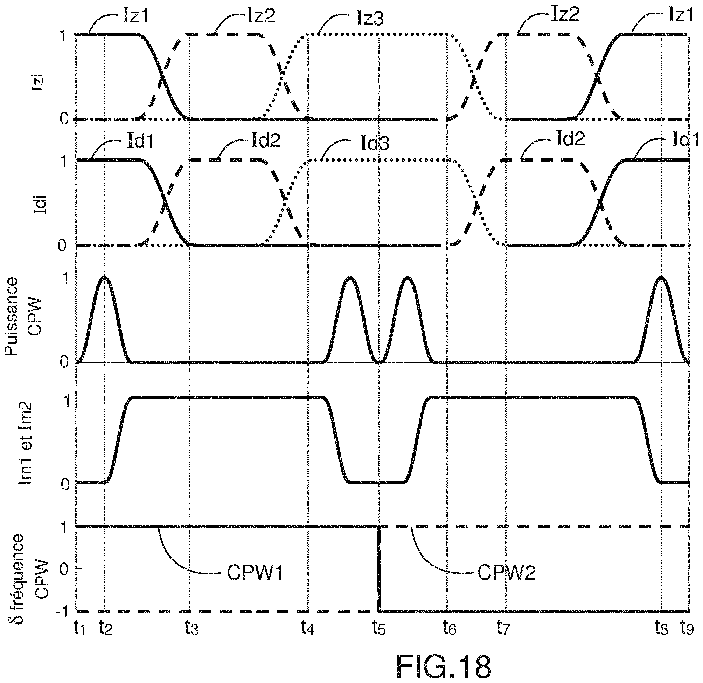

La figure 18 illustre une séquence des différents courants appliqués aux fils conducteurs, des puissances appliquées aux guides d'onde et des fréquences appliquées aux guides d'onde de la puce, selon cet autre mode de réalisation de l'invention appliqué à la deuxième variante.

La puissance hyper fréquence n'est plus appliquée de manière permanente entre $t_2$ et $t_4$ et entre $t_6$ et $t_8$ comme dans la figure 9, mais sous la forme d'impulsions, à $t_2$, avant $t_5$, puis après $t_5$ et à $t_8$ :

- Entre $t_1$ et $t_5$ :

  ◦ entre $t_1$ et $t_2$ la puissance hyper fréquence est progressivement augmentée de zéro à sa valeur maximale. Une fois la valeur maximale atteinte à $t_2$, la puissance hyper fréquence est progressivement diminuée jusqu'à zéro simultanément les courants $I_{m1}$ et $I_{m2}$ parcourant les fils $Wl_{m1}$ et $Wl_{m2}$ sont progressivement augmentés de 0 à leurs valeurs maximales.
  ◦ avant $t_5$ les courants $I_{m1}$ et $I_{m2}$ parcourant les fils $Wl_{m1}$ et $Wl_{m2}$ sont progressivement éteints et simultanément la puissance hyper fréquence est progressivement allumée avant d'être éteinte.

- Entre $t_5$ et $t_9$ :

  ○ après $t_5$ la puissance hyper fréquence est progressivement augmentée de zéro à sa valeur maximale. Une fois la valeur maximale atteinte, la puissance hyper fréquence est progressivement diminuée jusqu'à zéro simultanément les courants Im1 et Im2 parcourant les fils WIm1 et WIm2 sont progressivement augmentés de 0 à leurs valeurs maximales.
  ○ avant $t_9$ les courants Im1 et Im2 parcourant les fils WIm1 et WIm2 sont progressivement éteints et simultanément la puissance hyper fréquence est progressivement allumée avant d'être éteinte.

Cette variante s'affranchit de la stabilisation de la puissance micro-onde et offre les avantages présentés précédemment de la seconde variante présentée sur la figure 7. Les fils WIm1 et WIm2 sont parallèles aux guides d'ondes pour créer les pièges T1 et T2 à une position identique à la troisième variante présentée sur la figure 7 et n'ayant pas le troisième ensemble de fils.

La figure 19 illustre cet autre mode de réalisation de deux fils additionnels coplanaires avec les guides d'onde appliqué à la troisième variante de l'invention.

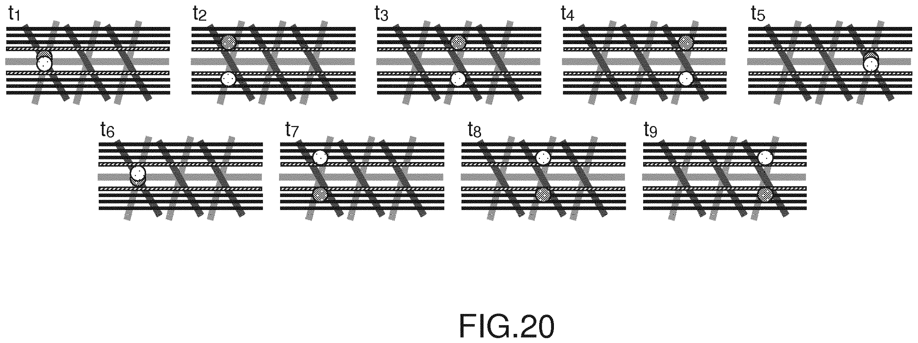

La figure 20 présente schématiquement une séquence du déplacement de chacun des nuages d'atomes ultrafroids pour ce mode de réalisation appliqué à la troisième variante de l'invention, qui s'opère de manière similaire à celui de la figure 11.

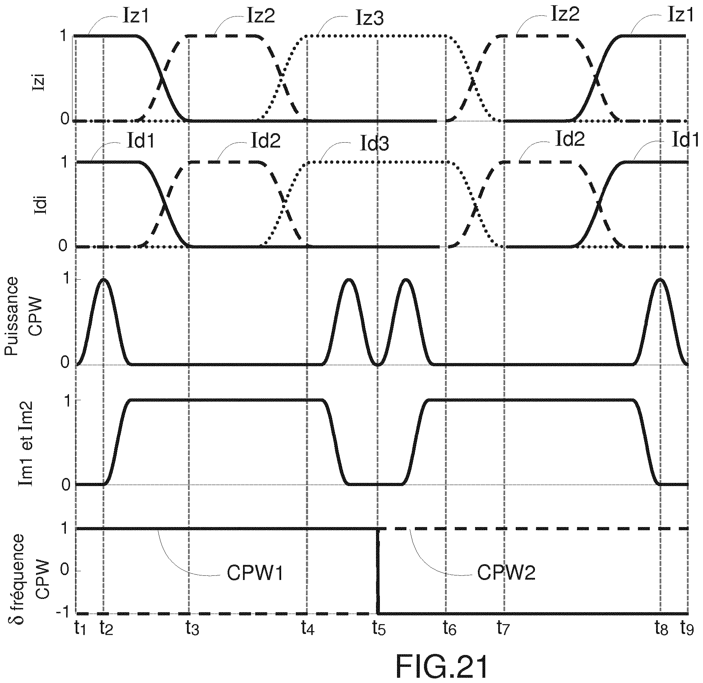

La figure 21 illustre une séquence des différents courants appliqués aux fils conducteurs, des puissances appliquées aux guides d'onde et des fréquences appliquées aux guides d'onde de la puce, selon cet autre mode de réalisation de l'invention appliqué à la troisième variante.

La puissance hyper fréquence n'est plus appliquée de manière permanente entre $t_2$ et $t_4$ et entre $t_6$ et $t_8$ comme dans la figure 12, mais sous la forme d'impulsions, à $t_2$, avant $t_5$, puis après $t_5$ et à $t_8$ :

- Entre $t_1$ et $t_5$ :

  ○ entre $t_1$ et $t_2$ la puissance hyper fréquence est progressivement augmentée de zéro à sa valeur maximale. Une fois la valeur maximale atteinte à $t_2$, la puissance hyper fréquence est progressivement diminuée jusqu'à zéro simultanément les courants Im1 et Im2 parcourant les fils WIm1 et WIm2 sont progressivement augmentés de 0 à leurs valeurs maximales.
  ○ avant $t_5$ les courants Im1 et Im2 parcourant les fils WIm1 et WIm2 sont progressivement éteints et simultanément la puissance hyper fréquence est progressivement allumée avant d'être éteinte.

- Entre $t_5$ et $t_9$ :

  ○ après $t_5$ la puissance hyper fréquence est progressivement augmentée de zéro à sa valeur maximale. Une fois la valeur maximum atteinte, la puissance hyper fréquence est progressivement diminuée jusqu'à zéro simultanément les courants Im1 et Im2 parcourant les fils WIm1 et WIm2 sont progressivement augmentés de 0 à leurs valeurs maximales.
  ○ avant $t_9$ les courants Im1 et Im2 parcourant les fils WIm1 et WIm2 sont progressivement éteints et simultanément la puissance hyper fréquence est progressivement allumée avant d'être éteinte.

Un courant continu Iz à une valeur constante est toujours appliqué à WIz.

Cette variante s'affranchit de la stabilisation de la puissance micro-onde et offre les avantages présentés précédemment de la troisième variante présentée sur la figure 10.

Avantageusement les fils WIm1 et WIm2 sont parallèle aux guides d'ondes pour créer les pièges T1 et T2 à une position identique à la troisième variante présentée sur la figure 10 et n'ayant pas le troisième ensemble de fils.

Selon un autre aspect, l'invention concerne un procédé de mesure d'une vitesse de rotation autour d'un axe 14 donné, par un capteur à atomes ultrafroids selon l'invention, incluant au moins les étapes de :

1) génération d'un nuage de dits atomes ultrafroids 12, incluant des phases d'émission desdits atomes, de refroidissement desdits atomes, d'initialisation desdits atomes dans au moins un dit état interne |a> et de piégeage d'un nuage de dits atomes ultrafroids dans un minimum local de potentiel, à une distance h dudit plan de mesure, généré par le passage de courants continus dans deux fils conducteurs définissant un point de croisement initial C1.

2) initialisation des états internes en superposant de manière cohérente lesdits atomes ultrafroids entre lesdits états |a> et |b> par une impulsion $\pi/\mathbf{2}$;

3) séparation spatiale d'un nuage d'atomes dans l'état interne |a> dans un premier piège T1 et d'un nuage d'atomes dans l'état interne |b> dans un deuxième piège T2, et déplacement ces pièges T1 et T2 en sens opposé suivant la trajectoire fermée 16, en :

- pilotant au moins un générateur de tension ou de courant à fréquences micro-ondes aux pulsations $\omega_a$ et $\omega_b$ dans les deux guides d'onde et en
- pilotant au moins un générateur de tension ou de courant continu aux bornes des fils conducteurs ;

4) recombinaison des états internes |a> et |b> en appliquant aux atomes ultrafroids une impulsion $\pi/2$ puis mesure de la densité d'atomes dans un état interne choisi parmi au moins |a> et |b> ;

5) détermination de la phase Sagnac desdits atomes ultrafroids et calcul de la vitesse de rotation dudit capteur selon ledit axe de mesure 14.

Préférentiellement le déplacement des deux pièges T1, T2 en sens opposé suivant ladite trajectoire fermée, comprend :

- une application de courants continus à un fil conducteur du premier ensemble Wlz (variante fil unique) ou Wli (variante pluralité de n fils indicés i de 1 à n), et à un fil du deuxième ensemble Wldi, définissant un point de croisement dit « allumé » Ci, puis « allumer » successivement tous les points de croisement pour déplacer lesdits pièges T1, T2 selon l'axe de symétrie Sy ;
- une application des puissances micro-onde injectées dans lesdits guides d'onde en alternant les pulsations $\omega_a$ et $\omega_b$ des micro-ondes injectées dans les guides d'onde pour déplacer les pièges T1, T2 selon un axe non parallèle audit axe de symétrie Sy.

Selon un aspect, qui ne fait pas partie de l'invention revendiquée, on ajuste la température desdits atomes ultrafroids, avec les pièges, dans une gamme de température dans laquelle un déphasage mesuré dans l'étape 5) est sensiblement indépendant de la densité d'atomes mesurée dans l'étape 4).

## Revendications

1. Capteur à atomes ultrafroids permettant une mesure de vitesse de rotation selon un axe de mesure (14), ledit capteur comprenant :

   • une puce (1) électronique placée dans un enceinte à vide et comportant un plan de mesure (13) normal audit axe de mesure (14) ;
   • une source d'atomes agencée pour générer un nuage d'atomes ultrafroids (12) près dudit plan de mesure (13) :
   • un émetteur d'ondes électromagnétiques adapté à initialiser les états internes desdits atomes ultrafroids (12) en une superposition d'états internes |a> et |b> ;
   • des moyens adaptés à générer un premier (T1) et un deuxième (T2) piège à atomes ultrafroids, un piège permettant d'immobiliser un nuage d'atomes ultrafroids (12) dans un état interne différent de l'autre piège, à une distance prédéterminée dudit plan de mesure, lesdits moyens comprenant :

     ❖ au moins un premier et un deuxième guides d'onde (CPW1, CPW2) adaptés à la propagation d'ondes hyperfréquences micro-ondes à des pulsations $\omega_a$ et $\omega_b$, lesdits guides d'onde étant non sécants et disposés symétriquement par rapport à un axe dénommé axe de symétrie (Sy),
     ❖ des fils conducteurs intégrés à ladite puce (1) et adaptés à être traversés par des courants continus, répartis selon un premier ensemble (E1) comprenant au moins un fil conducteur (Wlz, Wlz1, Wlz2, Wlz3), et un deuxième ensemble (E2) comprenant une pluralité de n fils conducteurs parallèles entre eux (Wld1, Wld2, Wld3), lesdits ensembles étant agencés de sorte que l'au moins un fil conducteur du premier ensemble ne soit pas parallèle aux fils conducteurs du deuxième ensemble, définissant n points de croisement (C1, C2, C3) entre l'au moins un fil conducteur du premier ensemble et un fil conducteur du deuxième ensemble, tous les points de croisement étant localisés sur l'axe de symétrie (Sy),
     ❖ un générateur de champ magnétique homogène (20),

   • un système de détection d'intensité optique adapté à mesurer au moins une population de dits atomes ultrafroids (12) dans un dit état interne ;

• au moins un processeur, au moins un générateur de tension ou de courant continu adapté à piloter des courants électriques dans lesdits fils conducteurs et au moins un générateur de tension ou de courant micro-ondes connecté aux dits guides d'onde (CPW1, CPW2),

• lesdits moyens étant configurés pour modifier l'énergie desdits atomes ultrafroids de manière à créer un minima de potentiel pour les atomes ultrafroids dans l'état interne |a> et un minima de potentiel pour les atomes ultrafroids dans l'état interne |b>, formant ainsi lesdits premier et deuxième pièges à atomes ultrafroids, et pour déplacer lesdits pièges (T1, T2) suivant une trajectoire fermée (16), parcourue dans un sens par les atomes ultrafroids du premier piège et dans le sens opposé par les atomes ultrafroids du deuxième piège.

2. Capteur selon la revendication précédente dont lesdits moyens sont adaptés à générer des pièges à atomes ultrafroids (12) n'étant pas condensés.

3. Capteur selon la revendication précédente dont la température des atomes ultrafroids est supérieure à 20 nanokelvins, préférentiellement supérieure à 100 nanokelvins, et inférieure à 400 nanokelvins, préférentiellement 300 nanokelvins.

4. Capteur selon l'une des revendications précédentes dont la direction dudit champ magnétique homogène est parallèle audit plan de mesure (13).

5. Capteur selon l'une des revendications précédentes dans lequel les deux guides d'onde sont parallèles entre eux.

6. Capteur selon l'une des revendications précédentes dans lequel le premier ensemble est constitué d'un fil conducteur unique (Wlz) coïncidant avec l'axe de symétrie (Sy).

7. Capteur selon la revendication 6 dans lequel les fils conducteurs du deuxième ensemble (Wldi) ne sont pas perpendiculaires au fil conducteur unique (Wlz) du premier ensemble.

8. Capteur selon l'une des revendications 1 à 5 dans lequel le premier ensemble comprend une pluralité de n fils conducteurs (Wlz1, Wlz2, Wlz3) parallèles entre eux.

9. Capteur selon la revendication 8 dans lequel un angle ($\ominus$) entre les fils conducteurs du premier ensemble et les fils conducteurs du deuxième ensemble est compris entre 30° et 60°.

10. Capteur selon l'une des revendications 8 ou 9 dans lequel le premier ensemble comprend en outre un fil conducteur coïncidant avec l'axe de symétrie.

11. Capteur selon l'une des revendications précédentes dans lequel les deux guides d'onde et les fils conducteurs sécants avec lesdits guides d'onde sont disposés respectivement selon un premier niveau (N1) et un deuxième niveau (N2) séparés par un isolant (18).

12. Capteur selon la revendication 11 dans lequel tous les fils conducteurs du premier et du deuxième ensemble sont disposés sur le deuxième niveau (N2).

13. Capteur selon l'une des revendications 11 ou 12 comprenant en outre un troisième ensemble (E3) comprenant un premier (Wlm1) et un deuxième (Wlm2) fils conducteurs disposés symétriquement par rapport à l'axe de symétrie et parallèlement respectivement au premier et au deuxième guide d'onde, et disposés sur le premier niveau (N1).

14. Capteur selon l'une des revendications précédentes dans lequel chaque dit guide d'onde (CPW1, CPW2) est choisi parmi une ligne à microruban, une ligne coplanaire et préférentiellement une ligne coplanaire comportant trois fils conducteurs (17) parallèles entre eux et isolés électriquement des fils conducteurs du premier et du deuxième ensemble, et du troisième ensemble le cas échéant.

15. Capteur selon l'une des revendications précédentes dans lequel ledit système de détection d'intensité optique est adapté à mesurer en un seul point de ladite trajectoire (16) au moins une population de dits atomes ultrafroids (12) dans un dit état interne.

16. Capteur selon la revendication précédente dans lequel ledit système de détection d'intensité optique comporte au moins un laser dont au moins une longueur d'onde correspond à un pic d'absorption de l'intensité lumineuse par lesdits atomes ultrafroids (12) dans un dit état interne.

**17.** Capteur selon l'une des revendications précédentes dans lequel la différence entre la longueur de ladite trajectoire fermée (16) suivie par deux dits pièges est inférieure à la longueur de Broglie desdits atomes ultrafroids, préférentiellement inférieure à 80% de la longueur de Broglie desdits atomes et préférentiellement inférieur à 50% de la longueur de Broglie desdits atomes.

**18.** Procédé de mesure d'une vitesse de rotation autour d'un axe (14) donné, par un dit capteur à atomes ultrafroids selon l'une des revendications précédentes, incluant au moins les étapes de :

1) génération d'un nuage de dits atomes ultrafroids (12), incluant des phases d'émission desdits atomes, de refroidissement desdits atomes, d'initialisation desdits atomes dans au moins un dit état interne |a> et de piégeage d'un nuage de dits atomes ultrafroids dans un minimum local de potentiel, à une distance h dudit plan de mesure, généré par le passage de courants continus dans deux fils conducteurs définissant un point de croisement initial (Ci);
2) initialisation des états internes en superposant de manière cohérente lesdits atomes ultrafroids entre lesdits états |a> et |b> par une impulsion $\pi/\mathbf{2}$ ;
3) séparation spatiale d'un nuage de dits atomes de dit état interne |a> dans un dit piège (T1) et d'un nuage de dits atomes de dit état interne |b> dans un autre dit piège (T2), et déplacement des dits pièges en sens opposé suivant ladite trajectoire (16) fermée, en :

• pilotant au moins un dit générateur de tension ou de courant à fréquences micro-ondes aux pulsations $\omega_a$ et $\omega_b$ dans les dits guides d'onde et en
• pilotant au moins un dit générateur de tension ou de courant continu aux bornes des fils conducteurs ;

4) recombinaison desdits états internes |a> et |b> en appliquant aux dits atomes ultrafroids une impulsion $\pi/\mathbf{2}$ puis mesure de la densité d'atomes dans un état interne choisi parmi au moins |a> et |b> ;
5) détermination de la phase Sagnac desdits atomes ultrafroids et calcul de la vitesse de rotation dudit capteur selon ledit axe de mesure (14).

**19.** Procédé de mesure d'une vitesse de rotation autour d'un axe (14) selon la revendication 18 mettant en œuvre un dit capteur à atomes ultrafroids dans lequel le déplacement des deux dits pièges (T1, T2), en sens opposé suivant ladite trajectoire fermée, comprend :

• une application de courants continus à un fil conducteur du premier ensemble (Wlz, Wlzi) et un fil du deuxième ensemble (Wldi) définissant un point de croisement (Ci), successivement sur tous le points de croisement pour déplacer lesdits pièges (T1, T2) selon ledit axe de symétrie (Sy) ;
• une application des puissances micro-onde injectées dans lesdits guides d'onde en alternant lesdites pulsations $\omega_a$ et $\omega_b$ desdites micro-ondes injectées dans lesdits guides d'onde pour déplacer lesdits pièges (T1, T2) selon un axe non parallèle audit axe de symétrie (Sy).


**Patentansprüche**

**1.** Sensor für ultrakalte Atome zum Rotationsgeschwindigkeitsmessen entlang einer Messachse (14), wobei der Sensor Folgendes umfasst:

• einen elektronischen Chip (1), der in einer Vakuumkammer platziert ist und eine Messebene (13) normal zur Messachse (14) aufweist;
• eine Atomquelle, die zum Erzeugen einer Wolke von ultrakalten Atomen (12) nahe der Messebene (13) ausgelegt ist;
• einen Sender für elektromagnetische Wellen, ausgelegt zum Initialisieren der inneren Zustände der ultrakalten Atome (12) in einer Überlagerung von inneren Zuständen |a> und |bc>;
• Mittel, ausgelegt zum Erzeugen einer ersten (T1) und einer zweiten (T2) Falle für ultrakalte Atome, wobei eine Falle es zulässt, eine Wolke von ultrakalten Atomen (12) in einem inneren Zustand, der sich von dem der anderen Falle unterscheidet, in einem vorbestimmten Abstand von der Messebene zu immobilisieren, wobei die Mittel Folgendes umfassen:

❖ mindestens einen ersten und einen zweiten Wellenleiter (CPW1, CPW2), die für die Ausbreitung von Mikrowellen bei $\omega_a$- und $\omega_b$-Impulsen ausgelegt sind, wobei sich die Wellenleiter nicht schneiden und symmetrisch in Bezug auf eine Symmetrieachse (Sy) genannte Achse angeordnet sind,

❖ Leitungsdrähte, die in den Chip (1) integriert sind und von Gleichströmen durchflossen werden können, verteilt gemäß einer ersten Anordnung (E1), die mindestens einen Leitungsdraht (Wlz, Wlz1, Wlz2, Wlz3) umfasst, und einer zweiten Anordnung (E2), die eine Mehrzahl von n Leitungsdrähten parallel zueinander (Wld1, Wld2, Wld3) umfasst,

wobei die Anordnungen so ausgelegt sind, dass der mindestens eine Leitungsdraht der ersten Anordnung nicht parallel zu den Leitungsdrähten der zweiten Anordnung ist, wodurch n Kreuzungspunkte (C1, C2, C3) zwischen dem mindestens einen Leitungsdraht der ersten Anordnung und einem Leitungsdraht der zweiten Anordnung definiert werden, wobei alle Kreuzungspunkte auf der Symmetrieachse (Sy) liegen,

❖ einen homogenen Magnetfeldgenerator (20),

• ein optisches Intensitätsdetektionssystem, das zum Messen mindestens einer Population der ultrakalten Atome (12) in einem inneren Zustand ausgelegt ist;

• mindestens einen Prozessor, mindestens einen Gleichspannungs- oder -stromgenerator, der zum Steuern der elektrischen Ströme in den Leitungsdrähten ausgelegt ist, und mindestens einen Mikrowellenspannungs- oder -stromgenerator, der mit den Wellenleitern (CPW1, CPW2) verbunden ist,

• wobei die Mittel konfiguriert sind zum Modifizieren der Energie der ultrakalten Atome, um ein Potentialminimum für die ultrakalten Atome im inneren Zustand |a> und ein Potentialminimum für die ultrakalten Atome im inneren Zustand |b> zu erzeugen, wodurch die erste und zweite Falle mit ultrakalten Atomen gebildet werden, und zum Verschieben der Fallen (T1, T2) entlang einer geschlossenen Bahn (16), die von den ultrakalten Atomen der ersten Falle in einer Richtung und von den ultrakalten Atomen der zweiten Falle in der entgegengesetzten Richtung durchlaufen wird.

2. Sensor nach dem vorherigen Anspruch, bei dem die Mittel zum Erzeugen von Fallen für ultrakalte Atome (12) ausgelegt sind, die nicht kondensiert sind.

3. Sensor nach dem vorherigen Anspruch, bei dem die Temperatur der ultrakalten Atome höher als 20 Nanokelvin, vorzugsweise höher als 100 Nanokelvin, und niedriger als 400 Nanokelvin, vorzugsweise 300 Nanokelvin ist.

4. Sensor nach einem der vorherigen Ansprüche, bei dem die Richtung des homogenen Magnetfeldes parallel zur Messebene (13) verläuft.

5. Sensor nach einem der vorherigen Ansprüche, bei dem die beiden Wellenleiter parallel zueinander sind.

6. Sensor nach einem der vorherigen Ansprüche, bei dem die erste Anordnung durch einen einzigen Leitungsdraht (Wlz) gebildet wird, der mit der Symmetrieachse (Sy) zusammenfällt.

7. Sensor nach Anspruch 6, bei dem die Leitungsdrähte der zweiten Anordnung (Wldi) nicht lotrecht zu dem einzelnen Leitungsdraht (Wlz) der ersten Anordnung sind.

8. Sensor nach einem der Ansprüche 1 bis 5, bei dem die erste Anordnung eine Mehrzahl von n zueinander parallelen Leiterdrähten (Wlz1, Wlz2, Wlz3) umfasst.

9. Sensor nach Anspruch 8, wobei ein Winkel ($\theta$) zwischen den Leitungsdrähten der ersten Anordnung und den Leitungsdrähten der zweiten Anordnung zwischen 30° und 60° liegt.

10. Sensor nach Anspruch 8 oder 9, wobei die erste Anordnung ferner einen Leitungsdraht umfasst, der mit der Symmetrieachse zusammenfällt.

11. Sensor nach einem der vorherigen Ansprüche, bei dem die beiden Wellenleiter und die die Wellenleiter schneidenden Leitungsdrähte jeweils in einer ersten Ebene (N1) und einer zweiten Ebene (N2), getrennt durch einen Isolator (18), angeordnet sind.

12. Sensor nach Anspruch 11, bei dem alle Leitungsdrähte der ersten und zweiten Anordnung auf der zweiten Ebene (N2) angeordnet sind.

**13.** Sensor nach Anspruch 11 oder 12, der ferner eine dritte Anordnung (E3) umfasst, die einen ersten (Wlm1) und einen zweiten (Wlm2) Leitungsdraht umfasst, die symmetrisch in Bezug auf die Symmetrieachse und parallel zum ersten bzw. zweiten Wellenleiter angeordnet sind und auf der ersten Ebene (N1) angeordnet sind.

**14.** Sensor nach einem der vorherigen Ansprüche, bei dem jeder der Wellenleiter (CPW1, CPW2) ausgewählt ist aus einer Mikrostreifenleitung, einer koplanaren Leitung und vorzugsweise einer koplanaren Leitung, die drei zueinander parallelen Leitungsdrähte (17) umfasst, die von den Leitungsdrähten der ersten und zweiten Anordnung und gegebenenfalls der dritten Anordnung elektrisch isoliert sind.

**15.** Sensor nach einem der vorherigen Ansprüche, wobei das optische Intensitätsdetektionssystem zum Messen mindestens einer Population der ultrakalten Atome (12) in einem inneren Zustand an einem einzigen Punkt der Bahn (16) ausgelegt ist.

**16.** Sensor nach dem vorherigen Anspruch, wobei das optische Intensitätsdetektionssystem mindestens einen Laser umfasst, von dem mindestens eine Wellenlänge einem Absorptionspeak der Lichtintensität durch die ultrakalten Atome (12) in dem inneren Zustand entspricht.

**17.** Sensor nach einem der vorherigen Ansprüche, wobei die Differenz zwischen der Länge der geschlossenen Bahn (16), der zwei der Fallen folgen, kleiner ist als die Broglie-Länge der ultrakalten Atome, vorzugsweise kleiner als 80% der Broglie-Länge der Atome und vorzugsweise kleiner als 50% der Broglie-Länge der Atome.

**18.** Verfahren zum Messen einer Rotationsgeschwindigkeit um eine gegebene Achse (14) durch den Sensor für ultrakalte Atome nach einem der vorherigen Ansprüche, das mindestens die folgenden Schritte beinhaltet:

1) Erzeugen einer Wolke der ultrakalten Atome (12), einschließlich der Phasen Emission der Atome, Abkühlen der Atome, Initialisieren der Atome in mindestens einem inneren Zustand |a> und Einfangen einer Wolke der ultrakalten Atome in einem lokalen Potentialminimum in einem Abstand h von der Messebene, erzeugt durch den Durchfluss von Gleichströmen in zwei Leitungsdrähten, die einen anfänglichen Kreuzungspunkt (Ci) definieren;

2) Initialisieren der inneren Zustände durch kohärentes Überlagern der ultrakalten Atome zwischen den Zuständen |a> und |b> durch einen Impuls $\pi/2$;

3) räumliches Trennen einer Wolke der Atome des inneren Zustands |a> in einer Falle (T1) und einer Wolke der Atome des inneren Zustands |b> in einer anderen Falle (T2), und Verschieben der Fallen in entgegengesetzten Richtungen entlang der geschlossenen Bahn (16), dabei:

• Steuern mindestens eines Mikrowellenfrequenz-Spannungs- oder Stromgenerators mit $\omega_a$- und $\omega_b$-Impulsen in den Wellenleitern und
• Steuern mindestens eines Spannungs- oder Gleichstromgenerators an den Anschlüssen der Leitungsdrähte;

4) Rekombinieren der inneren Zustände |a> und |b> durch Anlegen eines $\pi/2$-Impulses an die ultrakalten Atome und anschließendes Messen der Atomdichte in einem inneren Zustand, ausgewählt mindestens aus |a> und |b>;

5) Bestimmen der Sagnac-Phase der ultrakalten Atome und Berechnen der Rotationsgeschwindigkeit des Sensors entlang der Messachse (14).

**19.** Verfahren zum Messen einer Rotationsgeschwindigkeit um eine Achse (14) nach Anspruch 18 unter Verwendung eines Sensors für ultrakalte Atome, bei dem die Verschiebung der beiden Fallen (T1, T2) in entgegengesetzten Richtungen entlang der geschlossenen Bahn Folgendes beinhaltet:

• Speisen von Gleichströmen in einen Leitungsdraht der ersten Anordnung (Wlz, Wlzi) und einen Draht der zweiten Anordnung (Wldi), die einen Kreuzungspunkt (Ci) definieren, nacheinander an allen Kreuzungspunkten, um die Fallen (T1, T2) entlang der Symmetrieachse (Sy) zu verschieben;

• Anwenden der in die Wellenleiter eingespeisten Mikrowellenleistungen beim Alternieren der $\omega_a$- und $\omega_b$-Impulse der in die Wellenleiter eingespeisten Mikrowellen, um die Fallen (T1, T2) entlang einer Achse zu bewegen, die nicht parallel zur Symmetrieachse (Sy) ist.

**Claims**

1. An ultra-cold atom sensor for measuring a rotational velocity along a measurement axis (14), said sensor comprising:

   • an electronic chip (1) positioned in a vacuum chamber and having a measurement plane (13) normal to said measurement axis (14);
   • an atom source arranged so as to generate a cloud of ultra-cold atoms (12) close to said measurement plane (13);
   • an electromagnetic wave emitter designed to initialize the internal states of said ultra-cold atoms (12) as a superposition of internal states |a> and |b>;
   • means designed to generate a first (T1) and a second (T2) ultra-cold atom trap, one trap making it possible to immobilize a cloud of ultra-cold atoms (12) in an internal state different from the other trap, at a predetermined distance from said measurement plane, said means comprising:

   ❖ at least one first and one second waveguide (CPW1, CPW2) that are designed to propagate ultra-high frequency waves, or microwaves, with pulsations $\omega_a$ and $\omega_b$, said waveguides being non-secant and positioned symmetrically about an axis called the axis of symmetry (Sy),
   ❖ conductive wires integrated into said chip (1) and designed to be flowed through by DC currents, distributed into a first set (E1) comprising at least one conductive wire (WIz, WIz1, WIz2, WIz3), and a second set (E2) comprising a plurality of n conductive wires (WId1, WId2, WId3) that are parallel to each other, said sets being arranged such that the at least one conductive wire of the first set is not parallel with the conductive wires of the second set, defining n points of intersection (C1, C2, C3) between the at least one conductive wire of the first set and a conductive wire of the second set, all of the points of intersection being located on the axis of symmetry (Sy),
   ❖ a homogeneous magnetic field generator (20),

   • an optical intensity detection system designed to measure at least one population of said ultra-cold atoms (12) in one said internal state;
   • at least one processor, at least one DC current or voltage generator designed to control electric currents in said conductive wires, and at least one microwave current or voltage generator connected to said waveguides (CPW1, CPW2),
   • said means being configured to modify the energy of said ultra-cold atoms in such a way as to create a potential minimum for the ultra-cold atoms in the internal state |a> and a potential minimum for the ultra-cold atoms in the internal state |b>, thus forming said first and second ultra-cold atom traps, and to move said traps (T1, T2) along a closed path (16), traveled along in one direction by the ultra-cold atoms of the first trap and in the opposite direction by the ultra-cold atoms of the second trap.

2. The sensor according to the preceding claim, wherein said means are designed to generate uncondensed ultra-cold atom traps (12).

3. The sensor according to the preceding claim, wherein the temperature of the ultra-cold atoms is greater than 20 nanokelvin, preferably greater than 100 nanokelvin, and less than 400 nanokelvin, preferably than 300 nanokelvin.

4. The sensor according to one of the preceding claims, wherein the direction of said homogeneous magnetic field is parallel to said measurement plane (13).

5. The sensor according to one of the preceding claims, wherein the two waveguides are parallel to each other.

6. The sensor according to one of the preceding claims, wherein the first set consists of a single conductive wire (WIz) coincident with the axis of symmetry (Sy).

7. The sensor according to claim 6, wherein the conductive wires of the second set (WIdi) are not perpendicular to the single conductive wire (WIz) of the first set.

8. The sensor according to one of claims 1 to 5, wherein the first set comprises a plurality of n conductive wires (WIz1, WIz2, WIz3) that are parallel to each other.

9. The sensor according to claim 8, wherein an angle (⊖) between the conductive wires of the first set and the conductive wires of the second set is between 30° and 60°.

10. The sensor according to either of claims 8 and 9, wherein the first set furthermore comprises a conductive wire coincident with the axis of symmetry.

11. The sensor according to one of the preceding claims, wherein the two waveguides and the conductive wires that are secant to said waveguides are respectively positioned on a first level (N1) and a second level (N2) that are separated by an insulator (18).

12. The sensor according to claim 11, wherein all of the conductive wires of the first and of the second set are positioned on the second level (N2).

13. The sensor according to either of claims 11 and 12, further comprising a third set (E3) comprising a first (WIm1) and a second (WIm2) conductive wires that are positioned symmetrically about the axis of symmetry and in parallel with the first and with the second waveguides respectively, and positioned on the first level (N1).

14. The sensor according to one of the preceding claims, wherein each said waveguide (CPW1, CPW2) is chosen from microstrip line, a coplanar line and preferably a coplanar line having three conductive wires (17) that are parallel to each other and are electrically insulated from the conductive wires of the first and of the second set, and of the third set if applicable.

15. The sensor according to one of the preceding claims, wherein said optical intensity detection system is designed to measure, at a single point on said path (16), at least one population of said ultra-cold atoms (12) in one said internal state.

16. The sensor according to the preceding claim, wherein said optical intensity detection system has at least one laser, at least one wavelength of which corresponds to an absorption peak of the light intensity by said ultra-cold atoms (12) in one said internal state.

17. The sensor according to one of the preceding claims, wherein the difference between the length of said closed path (16) taken by two said traps is less than the de Broglie length of said ultra-cold atoms, preferably less than 80% of the de Broglie length of said atoms and preferably less than 50% of the de Broglie length of said atoms.

18. A method for measuring a rotational velocity about a given axis (14), using a said ultra-cold atom sensor according to one of the preceding claims, including at least the steps of:

1) generating a cloud of said ultra-cold atoms (12), including phases of dispensing said atoms, of cooling said atoms, of initializing said atoms in at least one said internal state |a> and of trapping a cloud of said ultra-cold atoms in a local potential minimum, at a distance h from said measurement plane, generated by DC currents flowing in two conductive wires defining an initial point of intersection (Ci);
2) initializing the internal states by coherently superposing said ultra-cold atoms between said states |a> and |b> through a pulse $\pi/2$;
3) spatially separating a cloud of said atoms in said internal state |a> into one said trap (T1) and a cloud of said atoms in said internal state |b> into another said trap (T2), and moving said traps in opposing directions along said closed path (16) by:

• controlling at least one said microwave-frequency current or voltage generator with angular frequencies $\omega_a$ and $\omega_b$ in said waveguides and by
• controlling at least one said DC current or voltage generator at the terminals of the conductive wires;

4) recombining said internal states |a> and |b> by applying a pulse $\pi/2$ to said ultra-cold atoms and then measuring the density of atoms in an internal state chosen from among at least |a> and |b>;
5) determining the Sagnac phase of said ultra-cold atoms and calculating the rotational velocity of said sensor along said measurement axis (14).

19. The method for measuring a rotational velocity about an axis (14) according to claim 18, implementing a said ultra-cold atom sensor, wherein the movement of the two said traps (T1, T2) in opposing directions along said closed path comprises:

• applying DC currents to a conductive wire of the first set (WIz, WIzi) and a wire of the second set (WIdi), defining a point of intersection (Ci), successively on all of the points of intersection so as to move said traps (T1, T2) along said axis of symmetry (Sy);

• applying the microwave powers injected into said waveguides while alternating said angular frequencies $\omega_a$ and $\omega_b$ of said microwaves injected into said waveguides so as to move said traps (T1, T2) along an axis that is not parallel to said axis of symmetry (Sy).

FIG.1

FIG.2

FIG.3a

FIG.3b

FIG.3c

EP 3 380 808 B1

FIG.4a

FIG.4b

FIG.5a

FIG.5b

FIG.6

FIG.7

FIG.8

EP 3 380 808 B1

FIG.9

FIG.10

FIG.11

FIG.12

FIG.13a

FIG.13b

EP 3 380 808 B1

FIG.14a

FIG.14b

FIG.15

FIG.16

FIG.17

FIG.18

FIG.19

EP 3 380 808 B1

FIG.20

FIG.21

## RÉFÉRENCES CITÉES DANS LA DESCRIPTION

**Documents brevets cités dans la description**

- CN 102927978

**Littérature non-brevet citée dans la description**

- Towards High Sensitivity Rotation Sensing Using an Atom Chip. **GARRIDO ALZAR ; C. L. ; YAN, W. ; LANDRAGIN, A.** High Intensity Lasers and High Field Phenomena. Optical Society of America, Mars 2012, JT2A-10

- **AMMAR, M. ; DUPONT-NIVET, M. ; HUET, L. ; POCHOLLE, J. P. ; ROSENBUSCH, P. ; BOUCHOULE, I. ; SCHWARTZ, S.** Symmetric micro-wave potentials for interferometry with thermal atoms on a chip. *PHYSICAL REVIEW A,* 2015, vol. 91, 053623